(19) **Europäisches Patentamt / European Patent Office / Office européen des brevets**

(11) **EP 4 411 340 A1**

(12) # EUROPEAN PATENT APPLICATION
published in accordance with Art. 153(4) EPC

(43) Date of publication:
**07.08.2024 Bulletin 2024/32**

(21) Application number: **22873047.9**

(22) Date of filing: **27.09.2022**

(51) International Patent Classification (IPC):
**G01N 5/02** *(2006.01)*    **G01N 19/00** *(2006.01)*
**G01N 19/04** *(2006.01)*

(52) Cooperative Patent Classification (CPC):
**G01N 5/02; G01N 19/00; G01N 19/04**

(86) International application number:
**PCT/JP2022/035992**

(87) International publication number:
**WO 2023/048296 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.09.2021 JP 2021157159**

(71) Applicant: **Nissan Chemical Corporation
Tokyo 103-6119 (JP)**

(72) Inventors:
• **KITAGAWA, Hirotake**
  **Sodegaura-shi, Chiba 299-0266 (JP)**
• **MATSUBARA, Kotatsu**
  **Funabashi-shi, Chiba 274-0069 (JP)**
• **OHORI, Takahiro**
  **Sodegaura-shi, Chiba 299-0266 (JP)**
• **KASHIHARA, Masaya**
  **Sodegaura-shi, Chiba 299-0266 (JP)**

(74) Representative: **Hoffmann Eitle
Patent- und Rechtsanwälte PartmbB
Arabellastraße 30
81925 München (DE)**

(54) **METHOD FOR MEASURING CHANGE IN PHYSICAL QUANTITY OF ADHERED SUBSTANCE BY MEANS OF QCM SENSOR**

(57)    A measurement method for a physical quantity change of an adhered substance that changes due to external stimulation comprises: measuring a physical quantity change of the adhered substance on an adhesion target by causing a detection unit, in which the adhesion target and the adhered substance placed thereon are on a sensor including a crystal resonator, so as to resonate in a medium; and measuring change in a resonance frequency of the crystal resonator caused by external stimulation to the detection unit, wherein the external stimulation is chemical injection or a temperature change, wherein the change in the physical quantity is a change in an elastic modulus of the adhered substance, a change in an elastic modulus of a laminated part due to detachment of the adhered substance or a change in weight of the adhered substance, and wherein the medium is gas or liquid.

FIG. 1

**Description**

TECHNICAL FIELD

The present invention relates to a method for measuring a change in a physical quantity such as a weight or elastic modulus of an adhered substance on an adhesion target in a medium using a quartz crystal microbalance (QCM) method, and relates to a method for observing a change in a state through the method.

BACKGROUND ART

When a voltage is applied to a crystal resonator, an inverse piezoelectric phenomenon in which it vibrates occurs. In addition, it is known that, when the weight of the crystal resonator part changes due to adhering of a substance to the surface of the crystal resonator or peeling off an adhered material, the resonance frequency of the crystal resonator changes. A QCM sensor is a means for measuring the weight and concentration of adhered substances based on this frequency change.

Various sensors that utilize these properties of crystal resonators have been proposed so far. For example, a concentration sensor which detects the concentration of a detection target substance in a mixed solution obtained by dissolving a predetermined detection target substance in a predetermined solvent, and includes a crystal resonator whose natural frequency changes according to a change in the concentration of the detection target substance and an oscillation circuit that oscillates the crystal resonator, wherein the crystal resonator is impregnated into the mixed solution and oscillated, the natural frequency of the crystal resonator at that time is determined, and thus the concentration of the detection target substance in the mixed solution is determined has been disclosed (Patent Document 1).

As a sensor for measuring environmental pollutants, a detection sensor in which cyclodextrin derivatives that bind to a specific substance are fixed to an electrode provided on a crystal resonator, wherein the cyclodextrin derivatives are fixed to the electrode using a disulfide compound or a thiol compound has been disclosed (Patent Document 2).

A method in which a sublimate from a thermosetting film during heating is adhered to the surface of a crystal resonator through a nozzle built into a detection part, and the amount of the sublimate is measured in real time as the heating time elapses from the change in resonance frequency according to the amount of the sublimate adhered to the crystal resonator has been disclosed (Patent Document 3).

It is described that sublimates of several types of lower antireflection films are quantified and compared under heating at 200°C using a QCM sensor (Non-Patent Document 1). This document reports that, in measurement of sublimates of antireflection films applied to a 4-inch wafer, differences between materials can be confirmed by baking and measuring several tens of wafers.

Prior Art Documents

Patent Documents

Patent Document 1: JP H6-18394 A
Patent Document 2: JP 2004-177258 A
Patent Document 3: WO 2007/111147

Non-Patent Documents

Non-Patent Document 1: SPIE Vol. 5753 2005, pp. 655 to 662

SUMMARY OF THE INVENTION

Problem to be Solved by the Invention

The relationship between the ease of adhesion of the adhesion target and the adhered substance and the ease of peeling off may change depending on the type and magnitude of external stimulation in the medium. A certain degree of correlation can be determined depending on the degree of specific external stimulation in the adsorption-desorption or adhesion-detachment relationship between the adhesion target and the adhered substance. When the ease of adhesion of the adhered substance on a specific adhesion target and the ease of peeling off are measured by utilizing this relationship, it can be expected to clarify the adsorption and desorption mechanism and provide useful information for a material design involving the adhesion target and the adhered substance under an external environment.

The present invention provides a method for measuring a change in a physical quantity such as a weight or elastic modulus of an adhered substance on an adhesion target using a QCM sensor, and the change in a state caused by the change in the physical quantity is observed.

Means for Solving the Problem

The present invention provides, as a first aspect, a measurement method for a change in a physical quantity of an adhered substance that changes due to external stimulation, comprising measuring a change in a physical quantity of an adhered substance on an adhesion target by causing a detection unit in which an adhesion target (a) and an adhered substance (b) on the adhesion target (a) are applied onto a sensor including a crystal resonator in an overlapping manner to resonate in a medium (d), and measuring an amount of change in a resonance frequency of the crystal resonator caused by external stimulation (c) to the detection unit,

as a second aspect, the measurement method according to the first aspect, wherein the external stimulation (c) is chemical injection or a temperature change,

as a third aspect, the measurement method according to the first aspect, wherein the change in the physical quantity is a change in an elastic modulus of the adhered substance,

as a fourth aspect, the measurement method according to the first aspect, wherein the change in the physical quantity is a change in an elastic modulus of a laminated part composed of the adhesion target and the adhered substance due to detachment of the adhered substance from the adhesion target,

as a fifth aspect, the measurement method according to the first aspect, wherein the change in the physical quantity is a change in a weight of the adhered substance,

as a sixth aspect, the measurement method according to the first aspect, wherein the medium (d) is a gas or a liquid,

as a seventh aspect, the measurement method according to the first aspect, wherein the a (adhesion target), the b (adhered substance), the c (external stimulation), and the d (medium) are a (bedrock), b (oil), c (administration of a chemical solution for recovery), and d (salt water),

as an eighth aspect, the measurement method according to the first aspect, wherein the a (adhesion target), the b (adhered substance), the c (external stimulation), and the d (medium) are a (substrate), b (contaminant), c (administration of a washing agent), and d (aqueous medium),

as a ninth aspect, the measurement method according to the first aspect, wherein the a (adhesion target), the b (adhered substance), the c (external stimulation), and the d (medium) are a (polymerizable monomers on a substrate), b (polymerizable monomers in the medium), c (administration of a catalyst into the medium), and d (solvent),

as a tenth aspect, the change measurement method according to the first aspect, wherein the a (adhesion target), the b (adhered substance), the c (external stimulation), and the d (medium) are a (coating film on a substrate), b (water), c (temperature change), and d (atmosphere adjustment gas),

as an eleventh aspect, the measurement method according to the first aspect, wherein the a (adhesion target), the b (adhered substance), the c (external stimulation), and the d (medium) are a (coating film on a substrate), b (detection target gas), c (temperature change), and d (atmosphere adjustment gas),

as a twelfth aspect, the measurement method according to the first aspect, wherein the a (adhesion target) is a silicon dioxide-containing layer, the b (adhered substance) is at least one oil selected from among a crude oil, a liquid hydrocarbon, and an edible oil, the c (external stimulation) is administration of an aqueous chemical solution for recovery containing silica particles and a surfactant, and the d (medium) is water or salt water, and wherein the change in the physical quantity is a change in a weight of the oil due to detachment from the silicon dioxide-containing layer,

as a thirteenth aspect, the measurement method according to the first aspect, wherein the a (adhesion target) is a silicon dioxide-containing layer, the b (adhered substance) is water in the silicon dioxide-containing layer, the c (external stimulation) is a temperature change, and the d (medium) is a humidity adjustment gas, and wherein the change in the physical quantity is a change in a weight of water due to desorption from the silicon dioxide-containing layer,

as a fourteenth aspect, the measurement method according to the first aspect, wherein the a (adhesion target) is a silicon dioxide-containing layer, the b (adhered substance) is water in a humidity adjustment gas, the c (external stimulation) is a temperature change, the d (medium) is a humidity adjustment gas, and the change in the physical quantity is a change in a weight of water due to adhesion to the silicon dioxide-containing layer,

as a fifteenth aspect, the measurement method according to the second aspect, wherein the chemical injection is performed by administering a solution containing a drug at 0.01 to 5 mL/min,

as a sixteenth aspect, the measurement method according to the first aspect, wherein the resonance frequency of the crystal resonator is in a range of 1 MHz to 100 MHz,

as a seventeenth aspect, a device for measuring the change in the physical quantity according to any one of the first aspect to the sixteenth aspect,

as an eighteenth aspect, a silica-containing chemical solution for oil recovery which satisfies a relationship of $\Delta F_A/\Delta F_B$=0.8 to 400 and $\Delta D_A/\Delta D_B$=0.8 to 100 when a detection unit including a sensor in which a silicon dioxide-containing layer corresponding to bedrock is formed on a sensor part having a diameter of 15 mm in which a gold electrode is wired on a crystal resonator, and an oil layer corresponding to a petroleum layer is adhered onto the silicon dioxide-containing layer at 0.5 to 10 $\mu g/cm^2$ is brought into contact with a fluid A containing, as components, salt water containing salts including sodium chloride at a concentration of 0.1 to 30% by mass and a silica-containing chemical solution for oil recovery or a fluid B containing the salt water but not containing the silica-containing chemical solution for oil recovery at a fluid flow rate of 0.01 to 5 mL/min at 25°C and the sensor is resonated in a frequency range of 1 MHz to 100 MHz, wherein a value of $\Delta F_A$ indicates a maximum value of a frequency change value $\Delta F$ indicating a change in a weight of the oil layer, which is detected by the sensor upon contact with the fluid A, a value of $\Delta D_A$ indicates a local maximum value of an energy dissipation value ΔD indicating a change in an elastic modulus of the oil layer, which is detected by the sensor upon contact with the fluid A, a value of $\Delta F_B$ indicates a maximum value of a frequency change value ΔF indicating a change in a weight of the oil layer, which is detected by the sensor upon contact with the fluid B, and a value of $\Delta D_B$ indicates a local maximum value of an energy dissipation value ΔD indicating a change in an elastic modulus of the oil layer, which is detected by the sensor upon contact with the fluid B, and wherein the silica-containing chemical solution for oil recovery contains 0.0001 to 50% by mass of a silica and 0.001 to 40% by mass of a surfactant with respect to a mass of the silica, and

as a nineteenth aspect, a silica-containing chemical solution for oil recovery which satisfies a relationship of $T_C > T_A$ when a detection unit including a sensor in which a silicon dioxide-containing layer corresponding to bedrock is formed on a sensor part having a diameter of 15 mm in which a gold electrode is wired on a crystal resonator, and an oil layer corresponding to a petroleum layer is adhered onto the silicon dioxide-containing layer at 0.5 to 10 $\mu$g/cm$^2$ is brought into contact with a fluid A containing, as components, salt water containing salts including sodium chloride at a concentration of 0.1 to 30% by mass and a silica-containing chemical solution for oil recovery or a fluid C containing the salt water and a silica-free chemical solution for oil recovery at a fluid flow rate of 0.01 to 5 mL/min at 25°C, and the sensor is resonated in a frequency range of 1 MHz to 100 MHz, wherein a value of $T_A$ is a time from when a change in an energy dissipation value $\Delta D_A$ indicating a change in an elastic modulus of the oil layer starts until the energy dissipation value $\Delta D_A$ reaches a maximum, which is detected by the sensor upon contact with the fluid A, and a value of Tc is a time from when a change in an energy dissipation value ΔDc indicating a change in an elastic modulus of the oil layer (=$\Delta D_B$ value) starts until the energy dissipation value ΔDc becomes a maximum, which is detected by the sensor upon contact with the fluid C.

Effects of the Invention

There is a need for a method of quantitatively expressing compatibility such as affinity and interaction between substances (here, an adhesion target and an adhered substance) using a numerical value. The compatibility between these substances also changes depending on what kind of medium the target substances are present in, for example, whether they are in a gas medium or a liquid medium. In addition, the change in the compatibility between substances is thought to be accelerated when external stimulation acts as a catalyst. Here, examples of external stimulation include chemical injection and a temperature change.

The compatibility between substances can be parameterized according to the change in the physical quantity such as a weight or elastic modulus through the state change. The change in the physical quantity is a change in the elastic modulus of the adhered substance on the adhesion target, a change in the weight (amount of detachment or the amount of adhesion) of the adhered substance or the like. By measuring these, it is possible to determine the amount of change or the occurrence of change (state change) itself.

The relationship between substances includes, for example, the relationship between bedrock and crude oil, the relationship between a substrate and contaminants, the relationship between polymerizable monomers, the relationship between adsorption and desorption of water on a coating film, and the relationship of gas adsorption on a coating film.

When the physical quantities (weight and elastic modulus) related to the adhered substance are measured, it is possible to observe the elastic state of the adhered substance, and the adsorption/desorption (adhesion/detachment) state of the adhered substance, and further observe the contamination/cleaning state of the substances, the wet/dry state, and the like therefrom.

In the present invention, the QCM method can be used to measure the interaction (adsorption onto the surface and desorption from the surface) that occurs between the substance (film) on the surface of the sensor and the substance present in the medium on the surface. When the frequency obtained when the sensor is caused to resonate is continuously measured, it is possible to measure the coefficient (ΔF value) of frequency change. In addition, when the sensor is caused to resonate and resonance is then instantaneously stopped, it is possible to observe film elasticity and structural changes (hardness and softness) as the energy dissipation value (ΔD value), which is a value at which vibration gradually decreases.

In the present invention, using these measurement results, it is found that the change (state change) in the relationship between the adhesion target and the adhered substance in the medium due to external stimulation can be measured as a change in the physical quantity.

BRIEF DESCRIPTION OF THE DRAWINGS

[FIG. 1] FIG. 1 is a diagram showing the measurement results of a frequency change value (ΔF value) indicating a change in the film weight (change in the weight of an oil layer) detected by a QCM sensor in Example 1 and Example 2.
[FIG. 2] FIG. 2 is a diagram showing the measurement results of an energy dissipation value (ΔD value) indicating a change in the film elastic modulus (change in the elastic modulus of an oil layer) detected by the QCM sensor in Example 1 and Example 2.

[FIG. 3] FIG. 3 is a diagram showing the measurement results of a frequency change value (ΔF value) indicating a change in the film weight (change in the weight of an oil layer) detected by the QCM sensor in Example 3 and Example 4.

[FIG. 4] FIG. 4 is a diagram showing the measurement results of an energy dissipation value (ΔD value) indicating a change in the film elastic modulus (change in the elastic modulus of an oil layer) detected by the QCM sensor in Example 3 and Example 4.

[FIG. 5] FIG. 5 is a diagram showing the measurement results of a frequency change value (ΔF value) indicating a change in the film weight (change in the weight of an oil layer) detected by the QCM sensor in Comparative Example 1.

[FIG. 6] FIG. 6 is a diagram showing the measurement results of an energy dissipation value (ΔD value) indicating a change in the film elastic modulus (change in the elastic modulus of an oil layer) detected by the QCM sensor in Comparative Example 1.

[FIG. 7] FIG. 7 is a diagram showing the measurement results of a frequency change value (ΔF value) indicating a change in the film weight (change in the weight of an oil layer) detected by the QCM sensor in Example 5.

[FIG. 8] FIG. 8 is a diagram showing the measurement results of an energy dissipation value (ΔD value) indicating a change in the film elastic modulus (change in the elastic modulus of an oil layer) detected by the QCM sensor in Example 5.

[FIG. 9] FIG. 9 is a diagram showing the measurement results of a frequency change value (ΔF value) indicating a change in the film weight (change in the weight of an oil layer) detected by the QCM sensor in Example 6.

[FIG. 10] FIG. 10 is a diagram showing the measurement results of an energy dissipation value (ΔD value) indicating a change in the film elastic modulus (change in the elastic modulus of an oil layer) detected by the QCM sensor in Example 6.

[FIG. 11] FIG. 11 is a diagram showing the measurement results of a frequency change value (ΔF value) indicating a change in the film weight (change in the weight of an oil layer) detected by the QCM sensor in Example 7.

[FIG. 12] FIG. 12 is a diagram showing the measurement results of an energy dissipation value (ΔD value) indicating a change in the film elastic modulus (change in the elastic modulus of an oil layer) detected by the QCM sensor in Example 7.

[FIG. 13] FIG. 13 is a diagram showing the measurement results of a frequency change value (ΔF value) indicating a change in the film weight (change in the weight of an oil layer) detected by the QCM sensor in Example 8.

[FIG. 14] FIG. 14 is a diagram showing the measurement results of an energy dissipation value (ΔD value) indicating a change in the film elastic modulus (change in the elastic modulus of an oil layer) detected by the QCM sensor in Example 8.

[FIG. 15] FIG. 15 is a diagram showing the measurement results of a frequency change value (ΔF value) indicating a change in the film weight (change in the weight of an oil layer) detected by the QCM sensor in Example 9.

[FIG. 16] FIG. 16 is a diagram showing the measurement results of an energy dissipation value (ΔD value) indicating a change in the film elastic modulus (change in the elastic modulus of an oil layer) detected by the QCM sensor in Example 9.

[FIG. 17] FIG. 17 is a diagram showing the measurement results of a frequency change value (ΔF value) indicating a change in the film weight (change in the weight of an oil layer) detected by the QCM sensor in Example 10.

[FIG. 18] FIG. 18 is a diagram showing the measurement results of an energy dissipation value (ΔD value) indicating a change in the film elastic modulus (change in the elastic modulus of an oil layer) detected by the QCM sensor in Example 10.

[FIG. 19] FIG. 19 is a diagram showing the measurement results of a frequency change value (ΔF value) indicating a change in the film weight (change in the weight of an oil layer) detected by the QCM sensor in Example 11.

[FIG. 20] FIG. 20 is a diagram showing the measurement results of an energy dissipation value (ΔD value) indicating a change in the film elastic modulus (change in the elastic modulus of an oil layer) detected by the QCM sensor in Example 11.

[FIG. 21] FIG. 21 is a diagram showing the measurement results of a frequency change value (ΔF value) indicating a change in the film weight (change in the weight of an oil layer) detected by the QCM sensor in Comparative Example 2.

[FIG. 22] FIG. 22 is a diagram showing the measurement results of an energy dissipation value (ΔD value) indicating a change in the film elastic modulus (change in the elastic modulus of an oil layer) detected by the QCM sensor in Comparative Example 2.

MODES FOR CARRYING OUT THE INVENTION

The present invention is a measurement method using a QCM sensor, and specifically, a method includes causing a detection unit including a sensor including a crystal resonator in which an adhesion target and an adhered substance are laminated to resonate in a medium, measuring the amount of change using a change in a resonance frequency of the crystal resonator caused by external stimulation to the detection unit, and thus measuring a change in a physical quantity of the adhered substance on the adhesion target. When the change in the physical quantity of the adhered substance is measured, it is possible to observe a change in a state such as dryness and wetness, for example, as will be described below, when the adhered substance is water.

The detection unit has a structure in which an adhesion target and an adhered substance thereon are applied onto a sensor including a crystal resonator in an overlapping manner. For example, the detection unit includes a sensor part in which an electrode is laminated on the surface of the crystal resonator, and a laminated part in which an adhesion target and an adhered substance on the surface are laminated on the sensor, and since the resonance frequency of the crystal resonator changes due to adsorption/desorption (or adhesion/detachment) of the adhered substance, the laminated part can be regarded as a sensing part.

In addition, the crystal resonator can be used in a range in which the resonance frequency is 100Hz to 100 MHz, typically 1 MHz to 100 MHz.

In the present invention, external stimulation refers to chemical injection or temperature change. Chemical injection and temperature changes not only change the compatibility such as affinity and interaction between substances (an adhesion target and an adhered substance) but also have the effect of accelerating or decelerating the change. Chemical injection includes injection of a drug into a medium and bringing the drug into contact with the adhered substance. The temperature change can be dealt with by raising or lowering the temperature of the adhesion target and the adhered substance from the outside using a heater, a cooler and the like, or by changing the temperature of the medium itself that is brought into contact with the adhesion target and the adhered substance.

When a substance adheres to the surface of the crystal resonator constituting the QCM sensor or an adhered substance is peeled off, the weight and elastic modulus of the crystal resonator part change. This causes a change in the resonance frequency of the crystal resonator. In the present invention, based on this change in resonance frequency, changes in weight and elastic modulus are measured, and state changes such as adhesion/detachment or adsorption/desorption of substances are observed through changes in these physical quantities.

The change in the physical quantity refers to, for example, a change in the elastic modulus of the adhered substance on the surface of the adhesion target. Regarding the adhesion target and the adhered substance, when a change in the elastic modulus of the adhered substance due to external stimulation in the medium is measured, it is possible to observe a change in the elastic state of the adhered substance.

The change in the physical quantity is, for example, a change in the elastic modulus of the laminated part composed of the adhesion target and the adhered substance due to detachment of the adhered substance on the surface of the adhesion target. The elastic state of the laminated part differs depending on whether the adhered substance is completely detached or partially detached.

The change in the physical quantity refers to, for example, a change in the weight of the adhered substance. This occurs due to detachment of the adhered substance from the surface of the adhesion target or adhesion of the adhered substance to the surface of the adhesion target. The resonance frequency changes depending on the amount of change in the weight of the adhered substance.

In the measurement method of the present invention, the adhesion target and the adhered substance are present in a medium, and the medium is a gas or a liquid. Examples of gases include an atmosphere adjustment gas and a humidity adjustment gas, and specific examples thereof include air, an inert gas, and water vapor. The humidity adjustment gas is a gas whose relative humidity (RH) is adjusted to a desired % (0% to 100%). In addition, examples of liquids include pure water, an aqueous solution, ionic water, salt water, and an organic solvent.

In the present invention, in measurement of a change in a state of compatibility such as affinity and interaction between substances performed using the QCM sensor, the relationship between a (adhesion target), b (adhered substance), c (external stimulation) and d (medium) is as follows.

For example, the relationship between a (adhesion target), b (adhered substance), c (external stimulation) and d (medium) is as follows: a (bedrock), b (oil), c (administration of a chemical solution for recovery) and d (salt water).

For example, this is considered as a situation assuming recovery of oil (crude oil) by injecting a chemical solution for recovery, and the crude oil recovery rate changes depending on components of a chemical solution for recovery that is an external stimulus. In addition, in this case, the effectiveness of the drug used in salt water is also influenced by the concentration of the salt water.

For example, the relationship between a (adhesion target), b (adhered substance), c (external stimulation) and d (medium) is as follows: a (substrate), b (contaminant), c (administration of a washing agent) and d (aqueous medium).

For example, this is a situation assuming washing of contaminants on the substrate, and the desorption rate of contaminants on the substrate changes depending on components (types) of a detergent that is an external stimulus.

The substrate of the present invention is, for example, an electrode on the surface of the crystal resonator, and may include, for example, a film or layer such as a silicon dioxide-containing layer formed on the electrode.

For example, the relationship between a (adhesion target), b (adhered substance), c (external stimulation) and d (medium) is as follows: a (polymerizable monomers on the substrate), b (polymerizable monomers in the medium), c (administration of a catalyst in the medium) and d (solvent).

This is a situation assuming polymerization of polymerizable monomers on the substrate and polymerizable monomers in the medium, and when a polymer is formed, the polymerization rate changes due to the catalyst that is an external stimulus. The catalyst is not particularly limited as long as it is used to change the polymerization rate of the polymer.

For example, the relationship between a (adhesion target), b (adhered substance), c (external stimulation) and d (medium) is as follows: a (coating film on a substrate), b (water), c (temperature change) and d (atmosphere adjustment gas).

This is considered as a situation assuming a change in the wet/dry state of the coating film on the substrate. Due to a temperature change that is external stimulation, the amount of atmospheric water adhered to the coating film on the substrate and the amount of water desorbed from the coating film change.

More specifically, the a (adhesion target) can be, for example, a silicon dioxide-containing layer formed on the electrode on the surface of the crystal resonator, the b (adhered substance) can be water in the silica-containing film, the c (external stimulation) can be a temperature change, and the d (medium) can be a humidity adjustment gas. Examples of electrodes include a gold electrode. In this aspect, the change in the physical quantity is a change in the weight of water due to desorption from the silicon dioxide-containing layer.

Here, for example, the a (adhesion target) can be a silicon dioxide-containing layer formed on the electrode on the surface of the crystal resonator, the b (adhered substance) can be water in a humidity adjustment gas to be described below, the c (external stimulation) can be a temperature change, and the d (medium) can be a humidity adjustment gas. Examples of electrodes include a gold electrode. In this aspect, the change in the physical quantity is a change in the weight of water due to adhesion to the silicon dioxide-containing layer.

For example, the relationship between a (adhesion target), b (adhered substance), c (external stimulation) and d (medium) is as follows: a (coating film on a substrate), b (detection target gas), c (temperature change) and d (atmosphere adjustment gas).

This is considered as a situation assuming a sensor that detects the presence of adsorption of a harmful gas and the like onto the coating film on the substrate, and the amount of adsorption.

Hereinafter, a specific example in which the a (adhesion target) is a silicon dioxide-containing layer corresponding to bedrock, the b (adhered substance) is an oil such as a crude oil, a liquid hydrocarbon corresponding to a crude oil or an edible oil, the c (external stimulation) is administration of an oil recovery aqueous chemical solution containing silica particles and a surfactant, and the d (medium) is water or salt water in which the detection unit is immersed will be shown. In this aspect, the change in the physical quantity is a change in the weight of the oil due to detachment from the silicon dioxide-containing layer.

As a (adhesion target), one in which a silicon dioxide-containing layer corresponding to bedrock is evaporated on a sensor part having a diameter of 15 mm in which a gold electrode is wired on a crystal resonator is prepared.

As b (adhered substance), for example, a liquid hydrocarbon corresponding to a crude oil is used, and an oil layer (also referred to as an oil film) corresponding to a petroleum layer is coated on the a (adhesion target). As described above, examples of oil layers include a crude oil layer, a layer of a $C_{8-20}$ liquid hydrocarbon, and an edible oil layer.

In a physical quantity measurement device, a detection unit including a sensor can be formed by a combination of a (adhesion target) and b (adhered substance).

The detection unit including a sensor is brought into contact with a fluid containing salt water and a silica-containing chemical solution for oil recovery, the sensor is caused to resonate, and a frequency change value ($\Delta F$ value) indicating a change in the film weight and an energy dissipation value ($\Delta D$ value) indicating a change in the film elastic modulus are measured. Regarding these values, the $\Delta F$ value increases by a factor of 0.8 to 400, 1.2 to 400, 20 to 400, or 100 to 400, and the $\Delta D$ value increases by a factor of 0.8 to 100, 1 to 100, or 5 to 100 compared to those in the case in which the silica-containing chemical solution for oil recovery is not included. This silica-containing chemical solution for oil recovery is also an object of the present invention.

Here, a case in which the $\Delta F$ value and the $\Delta D$ value are measured by performing bringing into contact with the fluid containing salt water and a silica-containing chemical solution for oil recovery is shown. However, in addition to the above case, measurement can be performed by bringing c (washing agent), d (aqueous medium) and a washing agent into contact with the detection unit of a (substrate) and b (contaminant), and measurement can also be performed by bringing c (catalyst into the medium) and d (solvent) into contact with the detection unit of a (polymerizable monomers on the substrate) and b (polymerizable monomers in the medium). In addition, measurement can also be performed by causing c (temperature change) in the detection unit of a (coating film on a substrate) and b (water) and bringing d (atmospheric gas) into contact with the detection unit, and measurement can also be performed by causing c (temperature change) in the detection unit of a (coating film on a substrate) and b (detection target gas), and bringing d (atmospheric gas) into contact with the detection unit. In addition, measurement can also be performed by causing c (temperature change) in the detection unit of a (silicon dioxide-containing layer) and b (water in the silicon dioxide-containing layer) and bringing d (humidity adjustment gas) into contact with the detection unit. Measurement can also be performed by causing c (temperature change) in the detection unit of a (silicon dioxide-containing layer) and b (water in the humidity adjustment gas), and bringing d (humidity adjustment gas) into contact with the detection unit.

More specifically, a detection unit including a sensor in which a silicon dioxide-containing layer corresponding to bedrock is formed on a sensor part having a diameter of 15 mm in which a gold electrode is wired on a crystal resonator, and an oil layer corresponding to a petroleum layer is adhered thereonto at 0.5 to 10 $\mu$g/cm$^2$, 0.5 to 7 $\mu$g/cm$^2$, or 0.5 to 5 $\mu$g/cm$^2$ is prepared, and a fluid A containing, as components, salt water containing salts including sodium chloride at a concentration of 0.1 to 30% by mass and a silica-containing chemical solution for oil recovery or a fluid B containing the salt water but not containing the silica-containing chemical solution for oil recovery is brought into contact with the detection unit at a fluid flow rate of 0.01 to 5 mL/min. Then, the sensor (crystal resonator) is caused to resonate in a frequency range of 100 Hz to 100 MHz, typically 1 MHz to 100 MHz. The silica-containing chemical solution for oil recovery contains silica at a concentration of 0.0001 to 50% by mass, and a surfactant at a mass ratio of 0.001 to 40% by mass relative to the silica.

Here, the maximum value of the frequency change value $\Delta F$ indicating a change in the weight of the oil layer is the $\Delta F_A$ value and the local maximum value of the energy dissipation value $\Delta D$ indicating a change in the elastic modulus of the oil layer is the $\Delta D_A$ value, which are detected by the sensor upon contact with the fluid A. Similarly, the maximum value of the frequency change value $\Delta F$ indicating a change in the weight of the oil layer is $\Delta F_B$ value, and the local maximum value of the energy dissipation value $\Delta D$ indicating a change in the elastic modulus of the oil layer is $\Delta D_B$ value, which are detected by the sensor upon contact with the fluid B.

Here, in the silica-containing chemical solution for oil recovery of the present invention, the relationships of $\Delta F_A/\Delta F_B$=0.8 to 400, 1.2 to 400, 20 to 400, or 100 to 400 and $\Delta D_A/\Delta D_B$=0.8 to 100, 1 to 100, or 5 to 100 are satisfied.

In addition, the detection unit including a sensor is brought into contact with a fluid containing salt water and a silica-containing chemical solution for oil recovery, the sensor is caused to resonate, and the time from when a change in the energy dissipation value ($\Delta D$ value) indicating a change in the film elastic modulus starts until the value reaches a maximum is measured. Since this value is smaller than when it is brought into contact with a fluid containing salt water and a silica-free chemical solution for oil recovery, the time is shortened. The silica-containing chemical solution for oil recovery is also an object of the present invention.

More specifically, a detection unit including a sensor in which a silicon dioxide-containing layer corresponding to bedrock is formed on a sensor part having a diameter of 15 mm in which a gold electrode is wired on a crystal resonator, and an oil layer corresponding to a petroleum layer is adhered thereonto at 0.5 to 10 $\mu$g/cm$^2$, 0.5 to 7 $\mu$g/cm$^2$, or 0.5 to 5 $\mu$g/cm$^2$ is prepared. A fluid A containing, as components, salt water containing salts including sodium chloride at a concentration of 0.1 to 30% by mass and a silica-containing chemical solution for oil recovery or a fluid C containing the salt water and a silica-free chemical solution for oil recovery is brought into contact with the detection unit at a flow rate of 0.01 to 5 mL/min. Then, the sensor is caused to resonate in a frequency range of 100 Hz to 100 MHz, typically 1 MHz to 100 MHz.

Here, the time from when a change in the energy dissipation value $\Delta D$ indicating a change in the elastic modulus of the oil layer starts until the value reaches a maximum, which is detected by the sensor upon contact with the fluid A, is the $T_A$ value, and similarly, the time from when a change in the energy dissipation value $\Delta D$ indicating a change in the elastic modulus of the oil layer starts until the value reaches a maximum, which is detected by the sensor upon contact with the fluid C, is the $T_C$ value.

Here, in the silica-containing chemical solution for oil recovery of the present invention, the relationship of $T_C>T_A$ is satisfied.

The sensor uses a crystal resonator having a diameter of 15 mm, and this can be used for measurement for resonating at, for example, a resonance frequency of about 25 MHz.

In measurement using the QCM sensor of the present invention, the amount of change in film weight (for example, a change in the weight of the oil layer) can be measured based on the frequency change value ($\Delta F$ value).

In the measurement, if the $\Delta F$ value when the QCM sensor is brought into contact with a blank solution containing no drug (for example, only salt water) is zero, the $\Delta F$ value changes negatively when an oil is adsorbed onto the film and the $\Delta F$ value changes positively when an oil is peeled off the film.

In addition, in measurement using the QCM sensor, the amount of change in film elastic modulus (for example, a change in the elastic modulus of the oil layer) can be measured based on the energy dissipation value ($\Delta D$ value).

In the measurement, if the $\Delta D$ value when the QCM sensor is brought into contact with a blank solution containing no drug (for example, only salt water) is zero, a negative change in $\Delta D$ reflects the state in which the surrounding area of the film becomes hard and a positive change in $\Delta D$ reflects the state in which the surrounding area of the film becomes soft.

The chemical solution for oil recovery according to the present invention (hereinafter also referred to as a chemical solution) can contain, as silica particles, for example, an aqueous silica sol having an average particle diameter of 3 to 200 nm, and a surfactant.

The aqueous silica sol can be used in a pH range of 2 to 12.

The aqueous silica sol is a colloidal dispersion system in which an aqueous solvent is used as a dispersion medium, and colloidal silica particles are used as dispersoids, and it can be produced by a known method using water glass (sodium silicate aqueous solution) as a raw material.

The average particle diameter of the aqueous silica sol refers to the average particle diameter of colloidal silica particles that are dispersoids.

In the present invention, unless otherwise specified, the average particle diameter of the aqueous silica sol (colloidal silica particles) refers to the specific surface area diameter measured by the nitrogen adsorption method (BET method) or the Sears method particle diameter.

In the present invention, the average particle diameter of the aqueous silica sol (colloidal silica particles) determined by the nitrogen adsorption method (BET method) or the Sears method can be 3 to 200 nm, 3 to 150 nm, 3 to 100 nm, or 3 to 30 nm.

In addition, in measurement of silica particles in a silica sol in a chemical solution by a dynamic light scattering method, the average particle diameter (DLS average particle diameter) can be measured, and the dispersion state thereof (whether silica particles are in a dispersion state or in an aggregated state) can be determined.

The DLS average particle diameter refers to an average value of secondary particle diameters (dispersed particle diameter). It is said that the diameter of DLS average particles that are completely dispersed is about twice the average particle diameter (which indicates a specific surface area diameter obtained by measurement by the nitrogen adsorption method (BET method) or the Sears method, and an average value of primary particle diameters). Here, as the DLS average particle diameter increases, it can be determined that the silica particles in the medium (aqueous silica sol or chemical solution) are in an aggregated state.

In the chemical solution according to the present invention, the average particle diameter of silica particles determined by the DLS method can be 3 to 200 nm, 3 to 150 nm, 3 to 100 nm, or 3 to 30 nm.

Aqueous silica sols include an alkaline aqueous silica sol and an acidic aqueous silica sol. Both of these can be used, and an acidic aqueous silica sol can be used preferably.

Examples of commercially available acidic aqueous silica sols include Snowtex (product name) ST-OXS, ST-OS, ST-O, ST-O-40, ST-OL, ST-OYL, and ST-OZL-35 (all commercially available from Nissan Chemical Corporation). An aqueous silica sol (product name, Snowtex ST-O, commercially available from Nissan Chemical Corporation) has an average particle diameter (BET method) of 10 to 11 nm and a DLS average particle diameter of 15 to 20 nm.

In the chemical solution for crude oil recovery according to the present invention, a silane compound to be described below may be bonded to a part of the surface of the silica particles in the aqueous silica sol. In addition, the chemical solution for crude oil recovery according to the present invention may contain a silane compound.

The silane compound is, for example, a silane coupling agent having at least one group selected from the group consisting of a vinyl group, an ether group, an epoxy group, a styryl group, a methacrylic group, an acrylic group, an amino group and an isocyanurate group as an organic functional group. In addition to the above examples, alkoxysilane, silazane, siloxane and the like may be exemplified as preferable silane compounds.

Examples of silane coupling agents having a vinyl group or styryl group include vinyltrichlorosilane, vinyltrimethoxysilane, vinyltriethoxysilane, vinyltris(2-methoxyethoxy)silane, vinylmethyldimethoxysilane, vinyltriacetoxysilane, allyltrichlorosilane, allyltrimethoxysilane, allyltriethoxysilane, and p-styryltrimethoxysilane.

Examples of silane coupling agents having an epoxy group include 3-glycidoxypropyltrimethoxysilane, 3-glycidoxypropyltriethoxy silane, 3-glycidoxypropylmethyldimethoxysilane, 3-glycidoxypropylmethyldiethoxysilane, 3-glycidoxypropyltriethoxysilane, 2-(3,4-epoxycyclohexyl)propyltrimethoxysilane, 2-(3,4-epoxycyclohexyl)propyltriethoxysilane, 2-(3,4-epoxycyclohexyl)ethyltrimethoxysilane, 2-(3,4-epoxycyclohexyl)ethyltriethoxysilane, 2-(3,4-epoxycyclohexyl)methyltrimethoxysilane, 2-(3,4-epoxycyclohexyl)methyltriethoxysilane, [(3-ethyl-3-oxetanyl)methoxy]propyltrimethoxysilane, and [(3-ethyl-3-oxetanyl)methoxy]propyltriethoxysilane.

Examples of silane coupling agents having a methacrylic group (methacryloyl group) or acrylic group (acryloyl group) include 3-methacryloyloxypropyltrimethoxysilane, 3-methacryloyloxypropyltriethoxysilane, 3-methacryloyloxypropylmethyldimethoxysilane, 3-methacryloyloxypropylmethyldiethoxysilane, 3-acryloyloxypropyltrimethoxysilane, and 3-acryloyloxypropyltriethoxysilane.

Examples of silane coupling agents having an amino group include N-2-(aminoethyl)-3-aminopropylmethyldimethoxysilane, N-2-(aminoethyl)-3-aminopropyltrimethoxysilane, 3-aminopropyltrichlorosilane, 3-aminopropyltrimethoxysilane, 3-aminopropyltriethoxysilane, 3-aminopropylmethyldimethoxysilane, 3-aminopropylmethyldiethoxysilane, 3-triethoxysilyl-N-(1,3-dimethyl-butylidene)propylamine, N-phenyl-3-aminopropyltrimethoxysilane, and N-phenyl-3-aminopropyltriethoxysilane.

Examples of silane coupling agents having an isocyanurate group include tris-(3-trimethoxysilylpropyl)isocyanurate and tris-(3-triethoxysilylpropyl)isocyanurate, and examples of silane coupling agents having an isocyanate group include 3-isocyanatepropyltriethoxysilane and 3-isocyanatepropyltrimethoxysilane.

In addition, alkoxysilanes such as methyltrimethoxysilane, methyltriethoxysilane, dimethyldimethoxysilane, dimethyldiethoxysilane, trimethylmethoxysilane, ethyltrimethoxysilane, tetraethoxysilane, n-propyltriethoxysilane, isobutyltrimethoxysilane, isobutyltriethoxy silane, phenyltrimethoxy silane, phenyltriethoxy silane, diphenyldimethoxysilane, diphenyldiethoxysilane, n-propyltrimethoxysilane, n-hexyltrimethoxysilane, n-hexyltriethoxysilane, cyclohexylmethyldimethoxysilane, n-octyltriethoxysilane, and n-decyltrimethoxysilane; silazanes such as hexamethyldisilazane; and siloxanes such as methylmethoxy siloxane and dimethyl phenylmethoxy siloxane can also be used.

Among these silane compounds, more preferably, an amphipathic silane coupling agent having an ether group, an epoxy group, a methacrylic group, or an acrylic group as an organic functional group is preferable.

Examples thereof include 3-glycidoxypropyltrimethoxysilane, 3-glycidoxypropylmethyldimethoxysilane, 3-glycidoxypropylmethyldiethoxysilane, 3-glycidoxypropyltriethoxysilane, 2-(3,4-epoxycyclohexyl)ethyltrimethoxysilane, 3-methacryloyloxypropyltrimethoxysilane, 3-methacryloyloxypropylmethyldimethoxysilane, 3-methacryloyloxypropyltriethoxysilane, 3-methacryloyloxypropylmethyldiethoxysilane, and 3-acryloyloxypropyltrimethoxysilane.

In the chemical solution for oil recovery according to the present invention, the silane compound can be added at a ratio such that, with respect to the silica solid content in the aqueous silica sol, that is, silica particles, the mass ratio of the silane compound/the aqueous silica sol (silica: $SiO_2$)=0.1 to 10.0. In addition, for example, it can be added at a ratio such that the mass ratio is 0.1 to 5.0.

When the mass ratio of the silane compound with respect to the silica particles in the aqueous silica sol is set to be within the above range, it can be expected to improve salt resistance of the chemical solution at high temperatures. However, if the mass ratio is less than 0.1, there is a risk of high-temperature salt resistance of the chemical solution deteriorating, and if the mass ratio is more than 10.0, that is, a large amount of the silane compound is added, no further improvement in effect is expected.

In addition, as described above, in the chemical solution for oil recovery according to the present invention, a silane compound to be described below may be bonded to a part of the surface of the silica particles in the aqueous silica sol. That is, the aqueous silica sol may be subjected to surface treatment with a silane compound. Here, "a silane compound is bonded to at least a part of the surface of the silica particle" refers to a form in which a silane compound is bonded to at least a part of the surface of the silica particle, and includes a form in which the silane compound covers the entire surface of the silica particle and a form in which the silane compound covers a part of the surface of the silica particle.

When silica particles with a silane compound bonded to at least a part of their surfaces, for example, silica particles whose surface is coated with a silane compound, are used, it is possible to further improve the high-temperature salt resistance of the chemical solution for oil recovery.

Therefore, in a preferable aspect, the chemical solution for oil recovery according to the present invention includes silica particles in which at least a part of the silane compound is bonded to at least a part of the surface of the silica particles in the aqueous silica sol.

Silica particles in which at least a part of the silane compound is bonded to the surface of at least some thereof (hereinafter also referred to as silica particles subjected to surface treatment with a silane compound) can be obtained by adding a silane compound to an aqueous silica sol at a ratio such that the mass ratio of the silane compound with respect to silica particles (silica solid content) in the aqueous silica sol is 0.1 to 10.0 and then performing a heat treatment, for example, at 50 to 100°C for 1 hour to 20 hours.

In this case, it is preferable that the amount of surface treatment with the silane compound, that is, the silane compound bonded to the surface of silica particles, be, for example, about 0.1 to 12 pieces per 1 $nm^2$ of the surface of the silica particles.

If the heat treatment temperature is lower than 50°C, the rate of partial hydrolysis of hydrolyzable groups (alkoxy groups, etc.) of the silane compound is slow, and the surface treatment efficiency deteriorates. On the other hand, if the temperature is higher than 100°C, this is not preferable because a dry silica gel is not formed.

In addition, if the heat treatment time is shorter than 1 hour, the partial hydrolysis reaction of the silane compound becomes insufficient, and if the heat treatment time is 20 hours or longer, the partial hydrolysis reaction of the silane compound becomes almost saturated, and thus there is no need to increase the heating time any longer.

Examples of surfactants added to the chemical solution for oil recovery according to the present invention include anionic surfactants, cationic surfactants, nonionic surfactants, and amphoteric surfactants.

For example, a silica sol subjected to surface treatment with an anionic functional group such as an epoxy group-containing silane can be used in combination with surfactants including anionic surfactants.

In addition, for example, a silica sol subjected to surface treatment with a cationic functional group such as an amino group-containing silane can be used in combination with surfactants including nonionic surfactants and/or cationic surfactants.

<Anionic surfactant>

In the chemical solution for oil recovery of the present invention, examples of anionic surfactants include sodium salts and potassium salts of fatty acids, alkylbenzene sulfonate, higher alcohol sulfate ester salts, polyoxyethylene alkyl ether sulfate, $\alpha$-sulfo fatty acid ester, $\alpha$-olefin sulfonate, monoalkyl phosphate ester salts, and alkanesulfonate.

Examples of alkylbenzene sulfonates include sodium salts, potassium salts and lithium salts, and $C_{10-16}$ sodium alkylbenzenesulfonate, $C_{10-16}$ potassium alkylbenzenesulfonate, and sodium alkylnaphthalene sulfonate may be exemplified.

Examples of higher alcohol sulfate ester salts include $C_{12}$ sodium dodecyl sulfates (sodium lauryl sulfate), triethanolamine lauryl sulfate, and triethanolammonium lauryl sulfate.

Examples of polyoxyethylene alkyl ether sulfates include sodium polyoxyethylene styrenated phenyl ether sulfate, ammonium polyoxyethylene styrenated phenyl ether sulfate, sodium polyoxyethylene decyl ether sulfate, ammonium polyoxyethylene decyl ether sulfate, sodium polyoxyethylene lauryl ether sulfate, ammonium polyoxyethylene lauryl ether sulfate, sodium polyoxyethylene tridecyl ether sulfate, and sodium polyoxyethylene oleyl cetyl ether sulfate.

Examples of $\alpha$-olefin sulfonates include sodium $\alpha$-olefin sulfonate.

Examples of alkanesulfonates include sodium 2-ethylhexyl sulfate.

<Cationic surfactant>

Examples of cationic surfactants in the chemical solution for oil recovery of the present invention include alkyltrimethylammonium salts, dialkyldimethylammonium salts, alkyldimethylbenzylammonium salts, and amine salt agents.

The alkyltrimethylammonium salt is a quaternary ammonium salt, and has chloride ions or bromine ions as counter ions. Examples thereof include dodecyltrimethylammonium chloride, cetyltrimethylammonium chloride, coco alkyltrimethylammonium chloride, and alkyl($C_{16-18}$)trimethylammonium chloride.

The dialkyldimethylammonium salt has two lipophilic main chains and two methyl groups. Examples thereof include didecyldimethylammonium chloride, dicoco alkyldimethylammonium chloride, di(hardened beef tallow alkyl)dimethylammonium chloride, and dialkyl ($C_{14-18}$) dimethylammonium chloride.

The alkyldimethylbenzylammonium salt is a quaternary ammonium salt having one lipophilic main chain, two methyl groups, and a benzyl group (benzalkonium chloride), and examples thereof include alkyl($C_{8-18}$) dimethylbenzylammonium chloride.

Examples of amine salt agents include those in which hydrogen atoms of ammonia are replaced with one or more hydrocarbon groups such as N-methylbishydroxyethylamine fatty acid ester hydrochloride.

<Amphoteric surfactant>

In the chemical solution for oil recovery of the present invention, examples of amphoteric surfactants include N-alkyl-$\beta$-alanine-type alkylamino fatty acid salts, alkylcarboxybetaine-type alkylbetaine, and N,N-dimethyldodecylamine oxide-type alkylamine oxide.

Examples of these include lauryl betaine, stearyl betaine, 2-akyl-N-carboxymethyl-N-hydroxyethylimidazolinium betaine, and lauryldimethylamine oxide.

<Nonionic surfactant>

In the chemical solution for oil recovery of the present invention, the nonionic surfactant is selected from among polyoxyethylene alkyl ether, polyoxyethylene alkyl phenyl ether, alkyl glucoside, polyoxyethylene fatty acid ester, sucrose fatty acid ester, sorbitan fatty acid ester, polyoxyethylene sorbitan fatty acid ester, and fatty acid alkanolamide. Examples of polyoxyethylene alkyl ethers include polyoxyethylene dodecyl ether (polyoxyethylene lauryl ether), polyoxyalkylene lauryl ether, polyoxyethylene tridecyl ether, polyoxyalkylene tridecyl ether, polyoxyethylene myristyl ether, polyoxyethylene cetyl ether, polyoxyethylene oleyl ether, polyoxyethylene stearyl ether, polyoxyethylene behenyl ether, polyoxyethylene-2-ethylhexyl ether, and polyoxyethylene isodecyl ether.

Examples of polyoxyethylene alkyl phenyl ethers include polyoxyethylene styrenated phenyl ether, polyoxyethylene nonylphenyl ether, polyoxyethylene distyrenated phenyl ether, and polyoxyethylene tribenzylphenyl ether.

Examples of alkyl glucosides include decyl glucoside and lauryl glucoside.

Examples of polyoxyethylene fatty acid esters include polyoxyethylene monolaurate, polyoxyethylene monostearate, polyoxyethylene monooleate, polyethylene glycol distearate, polyethylene glycol diolate, and polypropylene glycol diolate.

Examples of sorbitan fatty acid esters include sorbitan monocaprylate, sorbitan monolaurate, sorbitan monomyristate, sorbitan monopalmitate, sorbitan monostearate, sorbitan distearate, sorbitan tristearate, sorbitan monooleate, sorbitan triolate, sorbitan monosesquiolate, and ethylene oxide adducts thereof.

Examples of polyoxyethylene sorbitan fatty acid esters include polyoxyethylene sorbitan monolaurate, polyoxyethylene sorbitan monopalmitate, polyoxyethylene sorbitan monostearate, polyoxyethylene sorbitan tristearate, polyoxyethylene sorbitan monooleate, polyoxyethylene sorbitan trioleate, and polyoxyethylene sorbitan triisostearate.

In addition, examples of fatty acid alkanolamides include coconut oil fatty acid diethanolamide, beef tallow fatty acid diethanolamide, lauric acid diethanolamide, and oleic acid diethanolamide.

In addition, polyoxyalkyl ethers such as polyoxyethylene polyoxypropylene glycol and polyoxyethylene fatty acid ester, polyoxyalkyl glycol, polyoxyethylene hydrogenated castor oil ether, sorbitan fatty acid ester alkyl ether, alkyl polyglucoside, sorbitan monooleate, sucrose fatty acid ester and the like can also be used.

[Examples]

Hereinafter, the present invention will be described in more detail with reference to synthesis examples, examples, and comparative examples, but the present invention is not limited to these examples.

(Measurement device)

In the examples, a QSence Analyzer (commercially available from Biolin Scientific) was used as a sensor including a crystal resonator.

A silica sol prepared in a synthesis example and chemical solutions prepared in preparation examples were analyzed (pH value, electrical conductivity, DLS average particle diameter) using the following devices.

- DLS average particle diameter (dynamic light scattering method particle diameter): a dynamic light scattering method particle diameter measurement device, Zetasizer Nano (commercially available from Spectris, Division of Malvern) was used.
- pH: a pH meter (commercially available from DKK-TOA Corporation) was used.
- Electrical conductivity: an electrical conductivity meter (commercially available from DKK-TOA Corporation) was used.

(Relationship between amount of change in vibration frequency when substance is adsorbed onto crystal resonator and mass of adhered substance)

The following Sauerbrey equation was used for determination.

$$\Delta F = -(2 \Delta m n f_0{}^2)/(A \mu_q{}^{1/2} \rho_q{}^{1/2})$$

$\Delta F$ indicates the amount of change in vibration frequency of the crystal resonator,
$f_0$ indicates the fundamental vibration frequency,
$n$ indicates the number of harmonic tones (odd harmonics),
$A$ indicates the area of the metal thin film electrode attached to the crystal plate,
$\mu_q$ indicates the elastic modulus of the crystal, and is typically $2.947 \times 10^{11}$ dyn cm$^{-2}$,
$\rho_q$ indicates the density of the crystal, and is typically 2.648 g cm$^{-3}$, and

$\Delta m$ indicates the amount of the substance adhered per unit area of the electrode.

(Synthesis Example 1)

1,200 g of an aqueous silica sol (Snowtex (product name) ST-O, commercially available from Nissan Chemical Corporation, silica concentration=20.5% by mass, an average particle diameter of 11.0 nm determined by the BET method, and an average particle diameter of 17.2 nm determined by the DLS method) and a magnetic stirrer were put into a 2,000 mL glass eggplant flask, and while stirring the magnetic stirrer, 191.0 g of 3-glycidoxypropyltrimethoxysilane (Dynasylan GLYMO, commercially available from Evonik Industries) was then added so that the mass ratio of the silane compound with respect to the silica (colloidal silica particles) in the aqueous silica sol was 0.78. Subsequently, a cooling pipe through which tap water flowed was installed at the top of the eggplant flask, and while refluxing, the aqueous sol was heated to 60°C and held at 60°C for 4 hours and then cooled. After cooling to room temperature, the aqueous sol was taken out.

1,391.0 g of an aqueous silica sol of Synthesis Example 1 which was subjected to surface treatment with a silane compound with a mass ratio of 0.78 of the silane compound with respect to the silica in the aqueous silica sol, a silica solid content of 21.2% by mass, a pH of 3.1, an electrical conductivity of 353 μS/cm, and a DLS average particle diameter of 23.2 nm was obtained.

(Preparation Example 1)

A stirrer was put into a 120 mL styrofoam bottle, 9.0 g of pure water and 84.9 g of the aqueous silica sol subjected to surface treatment with the silane compound produced in Synthesis Example 1 were added, and stirred with a magnetic stirrer. Subsequently, while stirring the magnetic stirrer, 0.8 g of an anionic surfactant sodium α-olefin sulfonate (Riporan (registered trademark) LB-440, commercially available from Lion Specialty Chemicals Co., Ltd., an active component of 36.3%) was added and the mixture was stirred until it was completely dissolved. Subsequently, 0.30 g of an anionic surfactant sodium dodecyl sulfate (Sinolin (registered trademark) 90TK-T, commercially available from New Japan Chemical Co., Ltd.) was added, and the mixture was stirred until it was completely dissolved. Subsequently, as a nonionic surfactant, 1.7 g of polyoxyethylene styrenated phenyl ether (NOIGEN (registered trademark) EA-157, commercially available from DKS Co., Ltd.) with HLB=14.3 diluted with pure water to make 70% of an active component was added, the mixture was stirred until it was completely dissolved, and thereby a chemical solution of Preparation Example 1 containing the silica sol and the surfactant was produced.

(Preparation Example 2)

A stirrer was put into a 120 mL styrofoam bottle, 93.9 g of pure water was added, and stirred with a magnetic stirrer. Subsequently, while stirring the magnetic stirrer, 0.8 g of an anionic surfactant sodium α-olefin sulfonate (Riporan (registered trademark) LB-440, commercially available from Lion Specialty Chemicals Co., Ltd., an active component of 36.3%) was added, and the mixture was stirred until it was completely dissolved. Subsequently, 0.30 g of an anionic surfactant sodium dodecyl sulfate (Sinolin (registered trademark) 90TK-T, commercially available from New Japan Chemical Co., Ltd.) was added, and the mixture was stirred until it was completely dissolved. Subsequently, as a nonionic surfactant, 1.7 g of polyoxyethylene styrenated phenyl ether (NOIGEN (registered trademark) EA-157, commercially available from DKS Co., Ltd.) with HLB=14.3 diluted with pure water to make an active component of 70% was added, and the mixture was stirred until it was completely dissolved, and thereby a chemical solution of Preparation Example 2 having a total surfactant concentration of 1.8% was produced.

(Example 1)

A standardized used edible oil coated sensor (commercially available from_Biolin Scientific) was prepared (product number: QSX342, a sensor in which a silicon dioxide-containing layer was formed on a gold electrode on a crystal resonator, and additionally, 5.7 $\mu$g/cm$^2$ of an edible oil was applied onto the silicon dioxide-containing layer, and the crystal resonator had a diameter of 15 mm).

Using the chemical solution produced in Preparation Example 1, a test fluid 1 diluted with a 4% by mass brine solution was prepared so that the concentration of the aqueous silica sol contained in the chemical solution was 0.5% by mass, and the total surfactant concentration was 0.05%.

The sensor was set in a chamber, the test fluid 1 was sent into the chamber at a flow rate of 0.05 mL/min, and thus the edible oil (oil layer) applied onto the silicon dioxide-containing layer of the sensor and the test fluid 1 were brought into contact with each other.

Due to the interaction caused by the contact between the edible oil and the test fluid 1, the oil peeling effect (the effect of peeling off the edible oil on the silicon dioxide-containing layer) was quantified as the frequency change value (ΔF value) and the energy dissipation value (ΔD value) detected by the sensor.

Here, the fluid and the crystal resonator were brought into contact with each other at 25°C, and the resonance frequency of the crystal resonator was 25 MHz.

(Example 2)

A standardized used edible oil coated sensor (commercially available from Biolin Scientific) was prepared (product number: QSX342, a sensor in which a silicon dioxide-containing layer was formed on a gold electrode on a crystal resonator, and additionally, 5.7 $\mu$g/cm$^2$ of an edible oil was applied onto the silicon dioxide-containing layer, and the crystal resonator had a diameter of 15 mm).

Using the chemical solution produced in Preparation Example 2, a test fluid 2 diluted with a 4% by mass brine solution so that the total surfactant concentration contained in the chemical solution was 0.05% was prepared.

The sensor was set in a chamber, the test fluid 2 was sent into the chamber at a flow rate of 0.05 mL/min, and thus the edible oil (oil layer) applied onto the silicon dioxide-containing layer of the sensor and the test fluid 2 were brought into contact with each other.

Due to the interaction caused by the contact between the edible oil and the test fluid 2, the oil peeling effect (the effect of peeling off the edible oil on the silicon dioxide-containing layer) was quantified as the ΔF value and the ΔD value detected by the sensor.

Here, the fluid and the crystal resonator were brought into contact with each other at 25°C, and the resonance frequency of the crystal resonator was 25 MHz.

(Example 3)

The oil peeling effect was quantified in the same manner as in Example 1 except that the test fluid 1 diluted with a 4% by mass brine solution prepared in Example 1 was sent into the chamber at a flow rate of 0.1 mL/min. Here, the fluid and the crystal resonator were brought into contact with each other at 25°C, and the resonance frequency of the crystal resonator was 25 MHz.

(Example 4)

The oil peeling effect was quantified in the same manner as in Example 2 except that the test fluid 2 diluted with a 4% by mass brine solution prepared in Example 2 was sent into the chamber at a flow rate of 0.1 mL/min. Here, the fluid and the crystal resonator were brought into contact with each other at 25°C, and the resonance frequency of the crystal resonator was 25 MHz.

(Example 5)

A test fluid 3 diluted with a 4% by mass brine solution was prepared so that the concentration of the aqueous silica sol (product name ST-O, commercially available from Nissan Chemical Corporation, a pH of 2.6, a silica concentration of 20.5% by mass, an average primary particle diameter of 11.0 nm determined by the BET method, and an average particle diameter of 17.2 nm determined by the DLS method) was 0.5% by mass.

The sensor was set in a chamber in the same manner as in Example 1 except that the test fluid 3 was used, and the oil peeling effect was quantified in the same manner as in Example 1 except that the test fluid 3 was sent into the chamber at a flow rate of 0.05 mL/min. Here, the fluid and the crystal resonator were brought into contact with each other at 25°C, and the resonance frequency of the crystal resonator was 25 MHz.

(Example 6)

A silica ($SiO_2$)-coated sensor (commercially available from Biolin Scientific) was prepared (product number QSX303, a sensor in which a silicon dioxide-containing layer was formed on a gold electrode on a crystal resonator, and the crystal resonator had a diameter of 15 mm). The F value of the sensor at 25 MHz in air was 24722760.

A coating solution diluted with tetrahydrofuran so that the concentration of Light Sweet Azeri Crude Oil purchased from ONTA was 1.0% by mass was prepared. The coating solution was diluted twice with toluene and added dropwise to the sensor, and then spin-coated at 1,000 rpm for 30 seconds. The obtained sensor was baked on a hot plate at 100°C for 5 minutes to obtain a crude oil coated sensor. The F value of the crude oil coated sensor at 25 MHz in air was 24722168. Since the difference from the F value before application was $\Delta F=$-592, the amount of the crude oil applied onto the sensor after baking was 2.1 $\mu g/cm^2$ based on the Sauerbrey equation.

The obtained crude oil coated sensor was set in a chamber, the test fluid 1 prepared in Example 1 was sent into the chamber at a flow rate of 0.1 mL/min, and thus the crude oil (oil layer) applied onto the silicon dioxide-containing layer of the sensor and the test fluid 1 were brought into contact with each other.

Due to the interaction caused by the contact between the crude oil and the test fluid 1, the oil peeling effect (effect of peeling off the crude oil on the silicon dioxide-containing layer) was quantified as the $\Delta F$ value and the $\Delta D$ value detected by the sensor.

Here, the fluid and the crystal resonator were brought into contact with each other at 25°C, and the resonance frequency of the crystal resonator was 15 MHz.

(Example 7)

The oil peeling effect was quantified in the same manner as in Example 6 except that the resonance frequency of the crystal resonator was 25 MHz.

(Example 8)

The oil peeling effect was quantified in the same manner as in Example 6 except that the resonance frequency of the crystal resonator was 65 MHz.

(Example 9)

A silica ($SiO_2$)-coated sensor (commercially available from Biolin Scientific) was prepared (product number QSX303, a sensor in which a silicon dioxide-containing layer was formed on a gold electrode on a crystal resonator, and the crystal resonator had a diameter of 15 mm). The F value of the sensor at 25 MHz in air was 24718857.

A coating solution diluted with tetrahydrofuran so that the concentration of Light Sweet Azeri Crude Oil purchased from ONTA was 0.5% by mass was prepared. The coating solution was diluted twice with toluene and added dropwise to the sensor, and then spin-coated at 1,000 rpm for 30 seconds. The obtained sensor was baked on a hot plate at 100°C for 5 minutes to obtain a crude oil coated sensor. The F value of the crude oil coated sensor at 25 MHz in air was 24718493. Since the difference from the F value before application was $\Delta F=$-364, the amount of the crude oil applied onto the sensor after baking was 1.3 $\mu g/cm^2$ based on the Sauerbrey equation.

The obtained crude oil coated sensor was set in a chamber, the test fluid 1 prepared in Example 1 was sent into the chamber at a flow rate of 0.1 mL/min, and thus the crude oil (oil layer) applied onto the silicon dioxide-containing layer of the sensor and the test fluid 1 were brought into contact with each other.

Due to the interaction caused by the contact between the crude oil and the test fluid 1, the oil peeling effect (effect of peeling off the crude oil on the silicon dioxide-containing layer) was quantified as the $\Delta F$ value and the $\Delta D$ value detected by the sensor. Here, the fluid and the crystal resonator were brought into contact with each other at 25°C, and the resonance frequency of the crystal resonator was 25 MHz. Here, the amount of crude oil components remaining on the sensor after baking was 1.3 $\mu g/cm^2$.

(Example 10)

A silica ($SiO_2$)-coated sensor (commercially available from Biolin Scientific) was prepared (product number QSX303, a sensor in which a silicon dioxide-containing layer was formed on a gold electrode on a crystal resonator, and the crystal resonator had a diameter of 15 mm). The F value of the sensor at 25 MHz in air was 24718803.

A coating solution diluted with tetrahydrofuran so that the concentration of Light Sweet Azeri Crude Oil purchased from ONTA was 2.0% by mass was prepared. The coating solution was diluted twice with toluene and added dropwise to the sensor, and then spin-coated at 1,000 rpm for 30 seconds. The obtained sensor was baked on a hot plate at 100°C for 5 minutes to obtain a crude oil coated sensor. The F value of the crude oil coated sensor at 25 MHz in air was 24717802. Since the difference from the F value before application was $\Delta F=-1001$, the amount of the crude oil applied onto the sensor after baking was 3.5 $\mu g/cm^2$ based on the Sauerbrey equation.

The obtained crude oil coated sensor was set in a chamber, the test fluid 1 prepared in Example 1 was sent into the chamber at a flow rate of 0.1 mL/min, and thus the crude oil (oil layer) applied onto the silicon dioxide-containing layer of the sensor and the test fluid 1 were brought into contact with each other.

Due to the interaction caused by the contact between the crude oil and the test fluid 1, the oil peeling effect (effect of peeling off the crude oil on the silicon dioxide-containing layer) was quantified as the $\Delta F$ value and the $\Delta D$ value detected by the sensor. Here, the fluid and the crystal resonator were brought into contact with each other at 25°C, and the resonance frequency of the crystal resonator was 25 MHz.

(Example 11)

A silica ($SiO_2$)-coated sensor (commercially available from Biolin Scientific) was prepared (product number QSX303, a sensor in which a silicon dioxide-containing layer was formed on a gold electrode on a crystal resonator, and the crystal resonator had a diameter of 15 mm). The F value of the sensor at 25 MHz in air was 24722610.

A coating solution diluted with tetrahydrofuran so that the concentration of Light Sweet Azeri Crude Oil purchased from ONTA was 1.0% by mass was prepared. The coating solution was diluted twice with toluene and added dropwise to the sensor, and then spin-coated at 1,000 rpm for 30 seconds. The obtained sensor was baked on a hot plate at 100°C for 5 minutes to obtain a crude oil coated sensor. The F value of the crude oil coated sensor at 25 MHz in air was 24721749. Since the difference from the F value before application was $\Delta F=-861$, the amount of the crude oil applied onto the sensor after baking was 3.0 $\mu g/cm^2$ based on the Sauerbrey equation.

The test fluid 2 used in Example 2 was prepared.

The sensor was set in a chamber, the test fluid 2 was sent into the chamber at a flow rate of 0.1 mL/min, and thus the crude oil (oil layer) applied onto the silicon dioxide-containing layer of the sensor and the test fluid 2 were brought into contact with each other.

Due to the interaction caused by the contact between the edible oil and the test fluid 2, the oil peeling effect (the effect of peeling off the edible oil on the silicon dioxide-containing layer) was quantified as the $\Delta F$ value and the $\Delta D$ value detected by the sensor.

Here, the fluid and the crystal resonator were brought into contact with each other at 25°C, and the resonance frequency of the crystal resonator was 25 MHz.

(Comparative Example 1)

A standardized used edible oil coated sensor (commercially available from Biolin Scientific) was prepared (product number: QSX342, a sensor in which a silicon dioxide-containing layer was formed on a gold electrode on a crystal resonator, and additionally, 5.7 $\mu g/cm^2$ of an edible oil was applied onto the silicon dioxide-containing layer, and the crystal resonator had a diameter of 15 mm).

The sensor was set in a chamber, the 4% by mass brine solution was sent into the chamber at a flow rate of 0.05 mL/min, and thus the edible oil (oil layer) applied onto the silicon dioxide-containing layer of the sensor and the brine solution were brought into contact with each other.

Due to the interaction caused by the contact between the edible oil and the brine solution, the oil peeling effect was quantified as the $\Delta F$ value and the $\Delta D$ value detected by the sensor.

Here, the fluid and the crystal resonator were brought into contact with each other at 25°C, and the resonance frequency of the crystal resonator was 25 MHz.

(Comparative Example 2)

A silica ($SiO_2$)-coated sensor (commercially available from Biolin Scientific) was prepared (product number QSX303, a sensor in which a silicon dioxide-containing layer was formed on a gold electrode on a crystal resonator, and additionally, 2.8 $\mu g/cm^2$ of a crude oil was applied onto the silicon dioxide-containing layer, and the crystal resonator had a diameter of 15 mm).

A coating solution diluted with tetrahydrofuran so that the concentration of Light Sweet Azeri Crude Oil purchased from ONTA was 1.0% by mass was prepared. The coating solution was diluted twice with toluene and added dropwise to the sensor, and then spin-coated at 1,000 rpm for 30 seconds. The obtained sensor was baked on a hot plate at 100°C for 5 minutes to obtain a crude oil coated sensor.

The sensor was set in a chamber, the 4% by mass brine solution was sent into the chamber at a flow rate of 0.1 mL/min, and thus the crude oil (oil layer) applied onto the silicon dioxide-containing layer of the sensor and the brine solution were brought into contact with each other.

Due to the interaction caused by the contact between the crude oil and the brine solution, the oil peeling effect was quantified as the $\Delta F$ value and the $\Delta D$ value detected by the sensor. Here, the resonance frequency of the crystal resonator was 25 MHz.

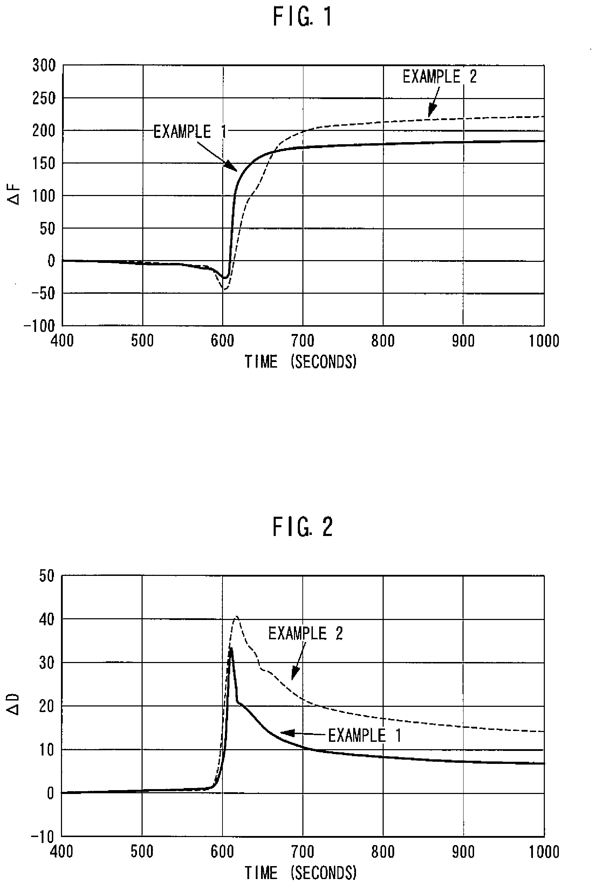

FIG. 1 is a diagram showing the change in the frequency change value ($\Delta F$) detected in Example 1 and Example 2 over time from when sending of a liquid into the chamber starts. Here, during the measurement, zero correction was performed on a blank solution (brine solution alone).

As shown in FIG. 1, it was confirmed that, based on the frequency change value (ΔF value) indicating a change in the weight of the oil layer (edible oil) on the silicon dioxide-containing layer, Example 1 using the chemical solution for recovery (test fluid 1) of Preparation Example 1 caused a frequency change earlier than Example 2 using the chemical solution for recovery (test fluid 2) of Preparation Example 2. Therefore, it could be evaluated that the chemical solution for recovery used in Example 1 caused the oil peeling effect more quickly than the chemical solution for recovery used in Example 2.

In addition, in Example 1, the maximum value of the ΔF value was 180, and in Example 2, the maximum value of the ΔF value was 220.

FIG. 2 is a diagram showing the change in the energy dissipation value (ΔD) detected in Example 1 and Example 2 over time from when sending of a liquid into the chamber starts. Here, during the measurement, zero correction was performed on a blank solution (brine solution alone).

As shown in FIG. 2, it was confirmed that, based on the energy dissipation value (ΔD value) indicating an elastic modulus of the oil layer (edible oil) on the silicon dioxide-containing layer, in Example 1 using the chemical solution for recovery (test fluid 1) of Preparation Example 1, the rise of the ΔD value and the attenuation curve from the maximum were sharper than those of Example 2 using the chemical solution for recovery (test fluid 2) of Preparation Example 2. Therefore, it could be evaluated that the chemical solution for recovery used in Example 1 caused a change (improvement of film flexibility) in the oil layer at an earlier stage than the chemical solution for recovery used in Example 2.

In addition, in Example 1, the local maximum value of the ΔD value was 33, and in Example 2, the local maximum value of the ΔD value was 40.

In addition, in the results shown in FIG. 2, the time from when a change in the ΔD value started until the value reached a maximum was 586 seconds to 610 seconds (24 seconds) in Example 1, and 586 seconds to 618 seconds (32 seconds) in Example 2, and in Example 2, 1.33 times as much time as Example 1 was required.

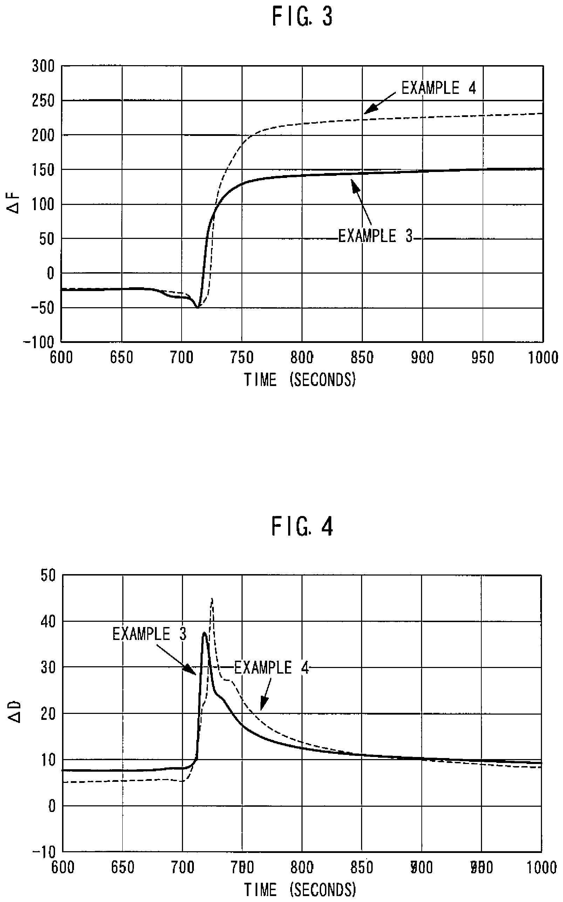

FIG. 3 is a diagram showing the change in the frequency change value (ΔF) detected in Example 3 and Example 4 over time from when sending of a liquid into the chamber starts. Here, during the measurement, zero correction was performed on a blank solution (brine solution alone).

As shown in FIG. 3, it was confirmed that, based on the frequency change value (ΔF value) indicating a change in the weight of the oil layer (edible oil) on the silicon dioxide-containing layer, Example 3 using the chemical solution for recovery (test fluid 1) of Preparation Example 1 caused a frequency change earlier than Example 4 using the chemical solution for recovery (test fluid 2) of Preparation Example 2. Therefore, it could be evaluated that the chemical solution for recovery used in Example 3 caused the oil peeling effect more quickly than the chemical solution for recovery used in Example 4.

In addition, in Example 3, the maximum value of the ΔF value was 150, and in Example 2, the maximum value of the ΔF value was 230.

In addition, comparing the ΔF values in FIG. 1 and FIG. 3, in Example 3 and Example 4, the flow rate of the chemical solution for recovery was twice that of Examples 1 and 2, and thus the oil peeling effect could be achieved earlier.

FIG. 4 is a diagram showing the change in the energy dissipation value (ΔD) detected in Example 3 and Example 4 over time from when sending of a liquid into the chamber starts. Here, during the measurement, zero correction was performed on a blank solution (brine solution alone).

As shown in FIG. 4, it was confirmed that, based on the energy dissipation value (ΔD value) indicating an elastic modulus of the oil layer (edible oil) on the silicon dioxide-containing layer, in Example 3 using the chemical solution for recovery (test fluid 1) of Preparation Example 1, the rise of the ΔD value and the attenuation curve from the maximum were sharper than those of Example 4 using the chemical solution for recovery (test fluid 2) of Preparation Example 2. Therefore, it could be evaluated that the chemical solution for recovery used in Example 3 caused a change (improvement of film flexibility) in the oil layer at an earlier stage than the chemical solution for recovery used in Example 4.

In addition, in Example 1, the local maximum value of the ΔD value was 38, and in Example 2, the local maximum value of the ΔD value was 45.

In addition, comparing the ΔD values in FIG. 2 and FIG. 4, it was confirmed that, in Examples 3 and 4, the flow rate of the chemical solution for recovery was twice that of Examples 1 and 2, and the change in the oil layer occurred earlier.

In addition, in the results shown in FIG. 4, the time from when a change in the ΔD value started until the value reached a maximum was 704 seconds to 719 seconds (15 seconds) in Example 3 and 704 seconds to 724 seconds (20 seconds) in Example 4, and in Example 4, 1.33 times as much time as Example 3 was required.

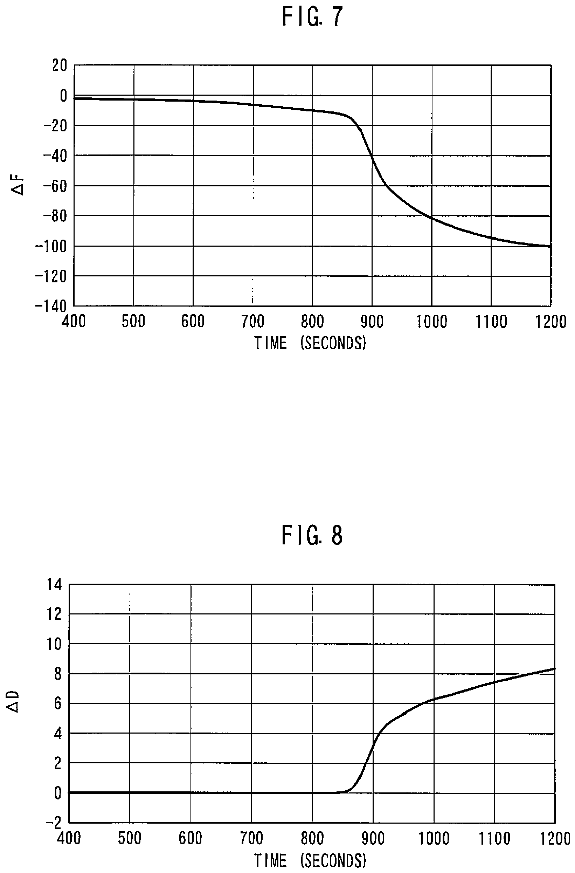

FIG. 7 and FIG. 8 are diagrams showing the change in the frequency change value (ΔF) (FIG. 7) or the energy dissipation value (ΔD) (FIG. 8) detected in Example 5 over time from when sending of a liquid into the chamber starts. Here, during the measurement, zero correction was performed on a blank solution (brine solution alone).

As shown in FIG. 7, it could be evaluated that, based on the frequency change value (ΔF value) indicating a change in the weight of the oil layer (edible oil) on the silicon dioxide-containing layer, the test fluid 3 had no effect of peeling off the edible oil. In addition, the ΔF value was a maximum of 0.

As shown in FIG. 8, it could be evaluated that, based on the energy dissipation value ($\Delta$D value) indicating an elastic modulus of the oil layer (edible oil) on the silicon dioxide-containing layer, the test fluid 3 had an effect of swelling the edible oil. In addition, the local maximum value of the $\Delta$D value was 8.4.

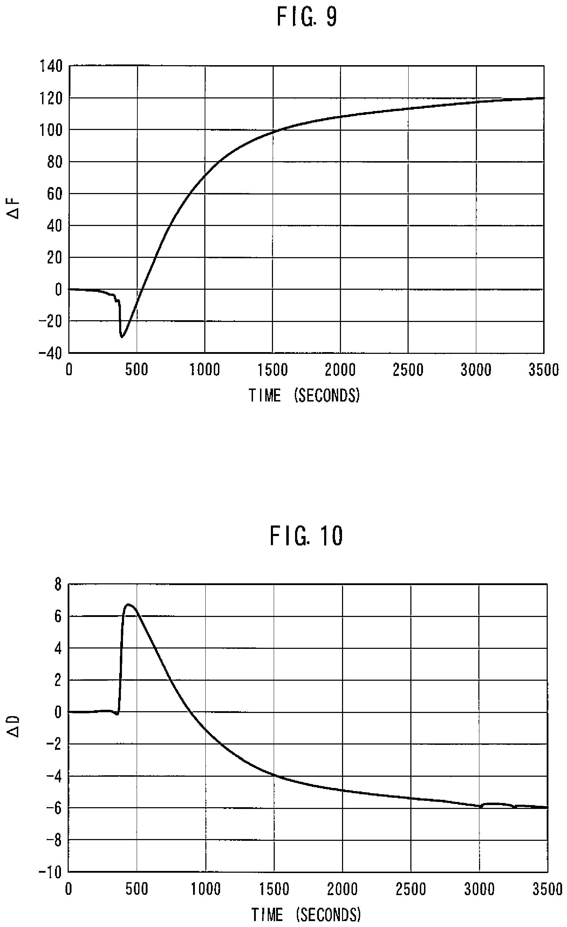

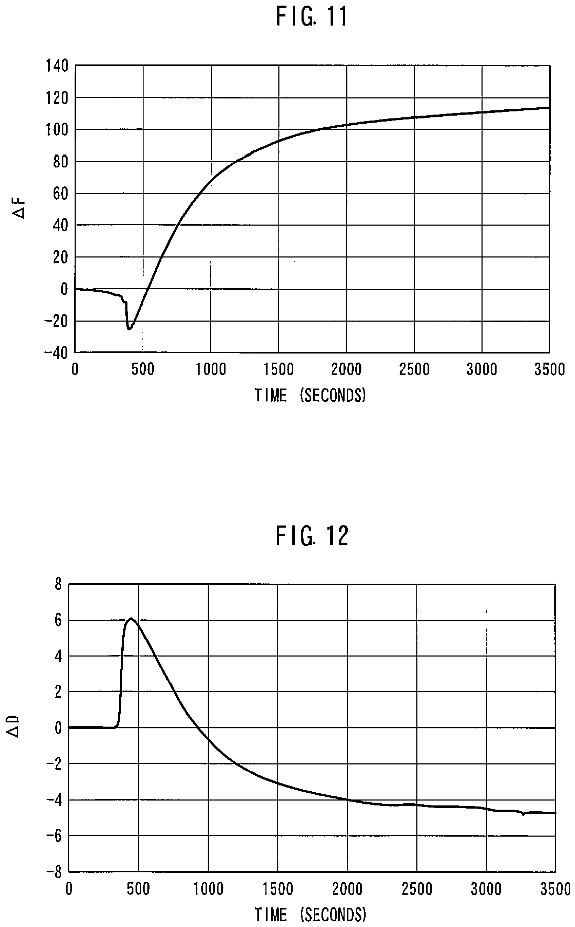

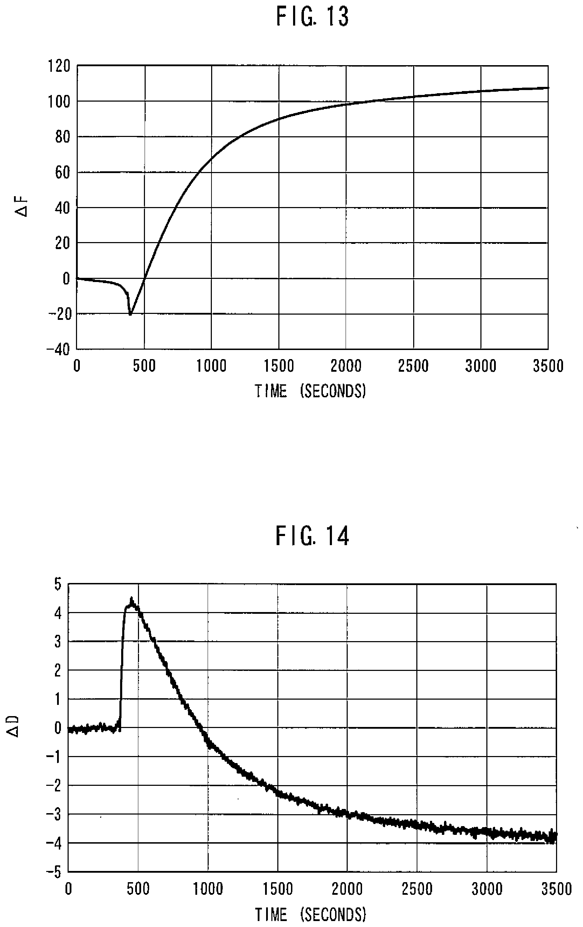

FIG. 9, FIG. 11, and FIG. 13 are diagrams showing the change in the frequency change value ($\Delta$F) over time from when sending of a liquid into the chamber started detected in Example 6, Example 7, and Example 8, respectively. Here, during the measurement, zero correction was performed on a blank solution (brine solution alone).

As shown in FIG. 9, FIG. 11, and FIG. 13, it was found that, based on the frequency change value ($\Delta$F value) indicating a change in the weight of the oil layer (crude oil) on the silicon dioxide-containing layer, the chemical solution for recovery (test fluid 1) of Preparation Example 1 had an effect of peeling off the crude oil.

It was found that the crude oil recovery performance could be evaluated regardless of the resonance frequency during measurement. Here, the maximum value of $\Delta$F was 120 in Example 6, 118 in Example 7, and 117 in Example 8.

FIG. 10, FIG. 12 and FIG. 14 are diagrams showing a change in the energy dissipation value ($\Delta$D) over time from when sending of a liquid into the chamber started detected in Example 6, Example 7, and Example 8, respectively. Here, during the measurement, zero correction was performed on a blank solution (brine solution alone).

As shown in FIG. 10, FIG. 12, and FIG. 14, it could be evaluated that, based on the energy dissipation value ($\Delta$D value) indicating an elastic modulus of the oil layer (crude oil) on the silicon dioxide-containing layer, the chemical solution for recovery (test fluid 1) of Preparation Example 1 caused a change (improvement of film flexibility) in the oil layer (crude oil).

Here, the local maximum value of the $\Delta$D value was 6.8 in Example 6, 6.0 in Example 7, and 4.3 in Example 8.

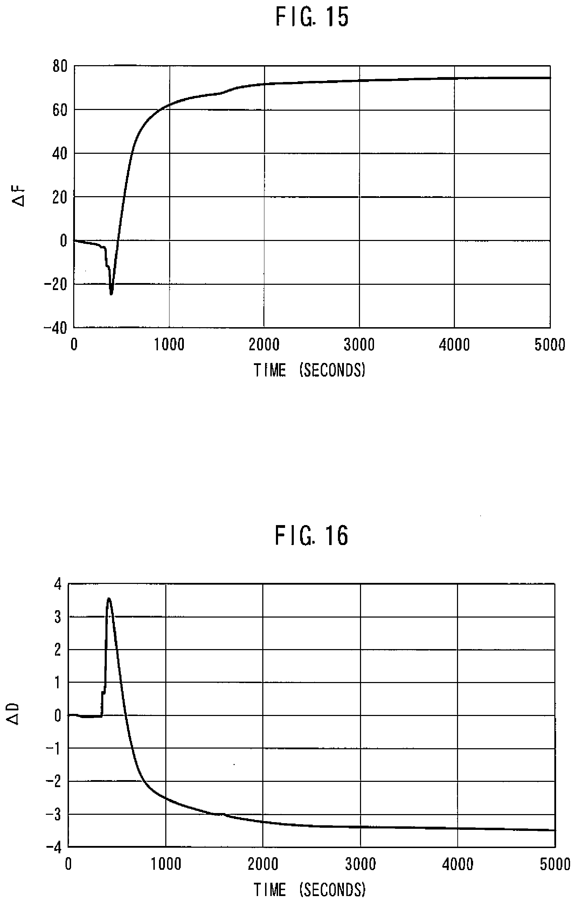

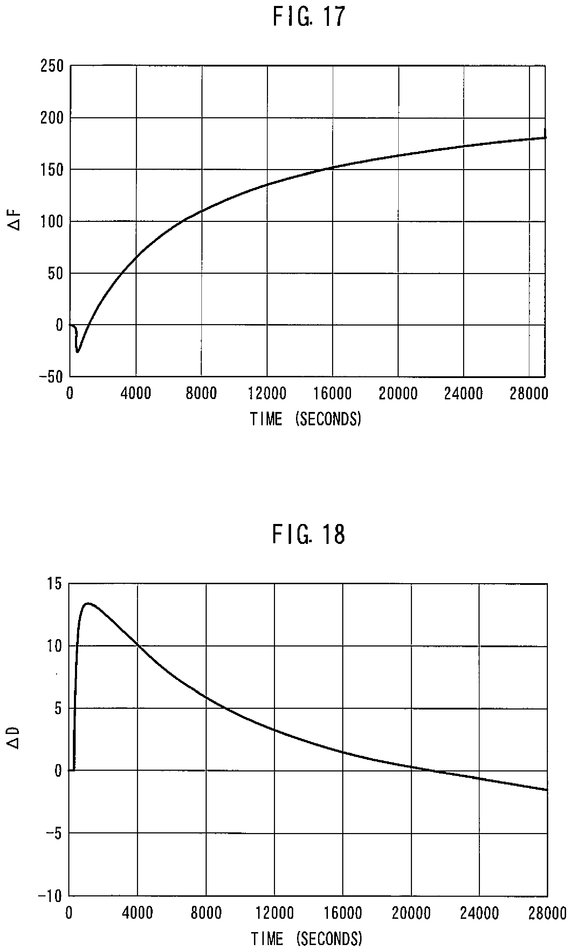

FIG. 15 and FIG. 17 are diagrams showing a change in the frequency change value ($\Delta$F) over time from when sending of a liquid into the chamber started detected in Example 9 and Example 10, respectively. Here, during the measurement, zero correction was performed on a blank solution (brine solution alone).

It was found that the time taken for the frequency change value ($\Delta$F value) indicating a change in the weight of the oil layer (crude oil) on the silicon dioxide-containing layer to become stable varied depending on the amount of the oil (crude oil) on the sensor. Here, the maximum value of the $\Delta$F value was 74 in Example 9 and 181 in Example 10.

FIG. 16 and FIG. 18 are diagrams showing a change in the frequency change value ($\Delta$D) over time from when sending of a liquid into the chamber started detected in Example 9 and Example 10, respectively. Here, during the measurement, zero correction was performed on a blank solution (brine solution alone).

It was found that the change in the energy dissipation value $\Delta$D indicating an elastic modulus of the oil layer (crude oil) on the silicon dioxide-containing layer varied depending on the amount of the oil (crude oil) on the sensor. Here, the local maximum value of the $\Delta$D value was 3.5 in Example 9 and 13.4 in Example 10.

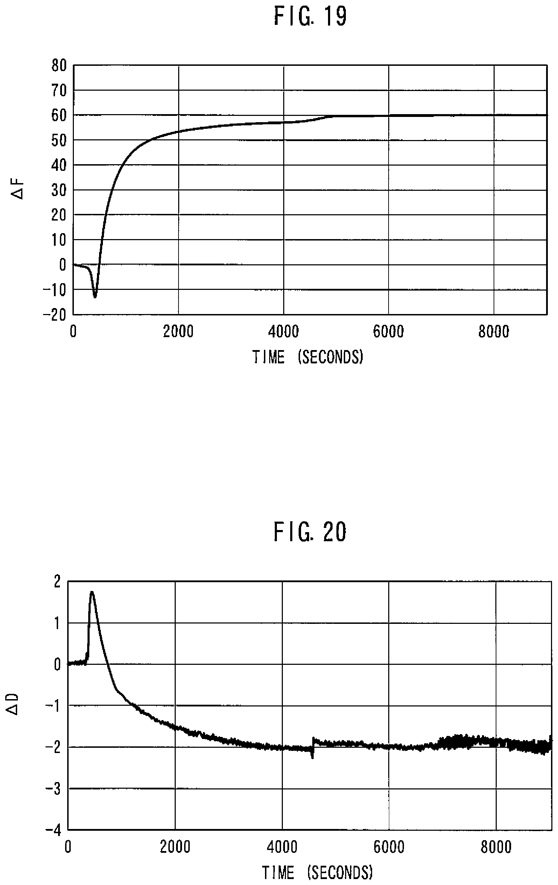

FIG. 19 and FIG. 20 are diagrams showing the change in the frequency change value ($\Delta$F) (FIG. 19) or the energy dissipation value ($\Delta$D) (FIG. 20) detected in Example 11 over time from when sending of a liquid into the chamber starts. Here, during the measurement, zero correction was performed on a blank solution (brine solution alone).

As shown in FIG. 19, it could be evaluated that, based on the frequency change value ($\Delta$F value) indicating a change in the weight of the oil layer (crude oil) on the silicon dioxide-containing layer, the test fluid 2 had an effect of peeling off the crude oil. In addition, the $\Delta$F value was a maximum of 61.

As shown in FIG. 20, it could be evaluated that, based on the energy dissipation value ($\Delta$D value) indicating an elastic modulus of the oil layer (crude oil) on the silicon dioxide-containing layer, the test fluid 2 had an effect of swelling the crude oil. In addition, the local maximum value of the $\Delta$D value was 1.8.

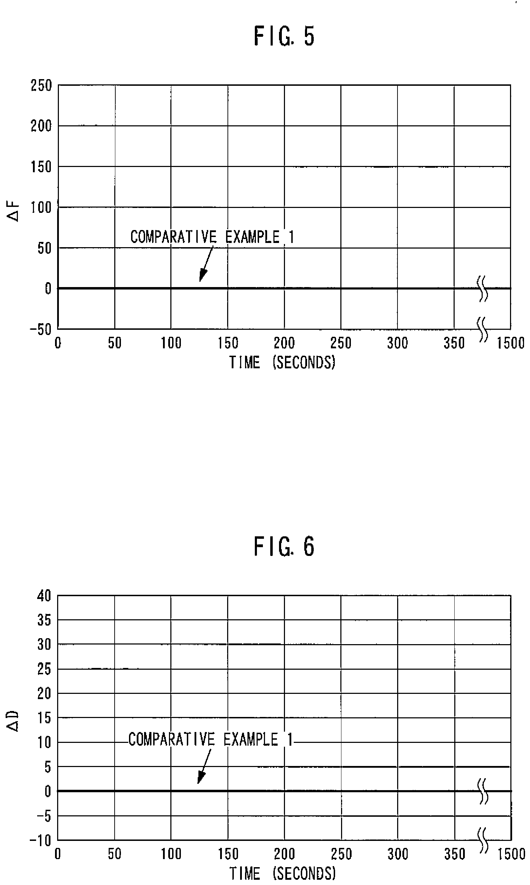

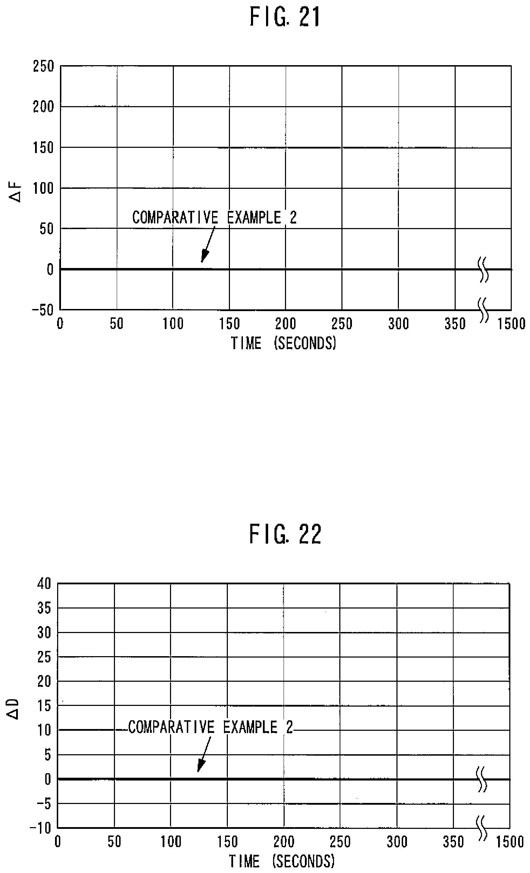

FIG. 5 and FIG. 21 are diagrams showing the change in the frequency change value ($\Delta$F) detected in Comparative Example 1 and Comparative Example 2 over time from when sending of a liquid into the chamber starts.

As shown in FIG. 5 and FIG. 21, it was found that, based on the frequency change value ($\Delta$F value) indicating a change in the weight of the oil layer (edible oil or crude oil) on the silicon dioxide-containing layer, no oil peeling effect was obtained with the brine solution (salt water).

FIG. 6 and FIG. 22 are diagrams showing the change in the frequency change value ($\Delta$D) detected in Comparative Example 1 and Comparative Example 2 over time from when sending of a liquid into the chamber starts.

As shown in FIG. 6 and FIG. 22, it was found that, based on the frequency change value ($\Delta$D value) indicating a change in the weight of the oil layer (edible oil or crude oil) on the silicon dioxide-containing layer, the brine solution (salt water) had no effect of swelling the oil layer.

In Comparative Example 1, the maximum value of $\Delta$F was 1, and the local maximum value of the $\Delta$D value was 1.

In Comparative Example 2, the maximum value of $\Delta$F was 1, and the local maximum value of the $\Delta$D value was 1.

Here, in Comparative Example 1 and Comparative Example 2, there was no oil recovery function, and the maximum value of the $\Delta$F value was "1." In addition, since there was no local maximum value for the $\Delta$D value,

the value was "1."

$\Delta F_A/\Delta F_B$ and $\Delta D_A/\Delta D_B$ based on Examples 1 to 4 and Comparative Example 1 when an edible oil coated sensor was used are shown.

The $\Delta F_A$ value indicates the maximum value of a frequency change indicating a change in the weight of the oil layer, which was detected by the sensor upon contact with the fluid used in Examples 1 to 4,

the $\Delta D_A$ value indicates the local maximum value of the energy dissipation value indicating a change in the elastic modulus of the oil layer, which was detected by the sensor upon contact with the fluid used in Examples 1 to 4,
the $\Delta F_B$ value indicates the maximum value of a frequency change indicating a change in the weight of the oil layer, which was detected by the sensor upon contact with the fluid used in Comparative Example 1, and
the $\Delta D_B$ value indicates the local maximum value of the energy dissipation value indicating a change in the elastic modulus of the oil layer, which was detected by the sensor upon contact with the fluid used in Comparative Example 1. $\Delta F_A/\Delta F_B$: 180 (Example 1), 220 (Example 2), 150 (Example 3), 230 (Example 4), $\Delta D_A/\Delta D_B$: 33 (Example 1), 40 (Example 2), 38 (Example 3), 45 (Example 4),
$\Delta F_A/\Delta F_B$ and $\Delta D_A/\Delta D_B$ based on Examples 6 to 11 and Comparative Example 2 when a crude oil coated sensor was used are shown.

The $\Delta F_A$ value indicates the maximum value of a frequency change indicating a change in the weight of the oil layer, which was detected by the sensor upon contact with the fluid used in Examples 6 to 11,

the $\Delta D_A$ value indicates the local maximum value of the energy dissipation value indicating a change in the elastic modulus of the oil layer, which was detected by the sensor upon contact with the fluid used in Examples 6 to 11,
the $\Delta F_B$ value indicates the maximum value of a frequency change indicating a change in the weight of the oil layer, which was detected by the sensor upon contact with the fluid used in Comparative Example 2, and
the $\Delta D_B$ value indicates the local maximum value of the energy dissipation value indicating a change in the elastic modulus of the oil layer, which was detected by the sensor upon contact with the fluid used in Comparative Example 2. $\Delta F_A/\Delta F_B$: 120 (Example 6), 118 (Example 7), 117 (Example 8), 74 (Example 9), 181 (Example 10), 61 (Example 11), $\Delta D_A/\Delta D_B$: 6.6 (Example 6), 6.0 (Example 7), 4.3 (Example 8), 3.5 (Example 9), 13.4 (Example 10), 1.8 (Example 11)
$T_A$ was 24 seconds (Example 1), 32 seconds (Example 2), 15 seconds (Example 3), 20 seconds (Example 4), 95 seconds (Example 6), 98 seconds (Example 7), 108 seconds (Example 8), 88 seconds (Example 9), 775 seconds (Example 10), 99 seconds (Example 11), and
Tc was at least 1,500 seconds or longer (Comparative Example 1, Comparative Example 2).

Here, the start time of the change in the $\Delta D_A$ value in $T_A$ calculation was 586 seconds (Example 1, Example 2), 704 seconds (Example 3, Example 4), 339 seconds (Example 6, Example 7, Example 8), 334 seconds (Example 9), 344 seconds (Example 10), and 331 second (Example 11), and the start time of change in the $\Delta D_C$ value in Tc calculation was 0 seconds (Comparative Example 1, Comparative Example 2). Since there was no change between Comparative Example 1 and Comparative Example 2, it was thought the measurement start time was regarded as the change start, and the time Tc to reach the maximum was 1,500 seconds or longer.

INDUSTRIAL APPLICABILITY

The present invention provides a method for measuring a change in a state caused by a change in a physical quantity such as a weight or elastic modulus of an adhered substance on an adhesion target using a QCM sensor, and when the ease of adhesion of the adhered substance on a specific adhesion target and the ease of peeling off are measured, it is possible to clarify the adsorption and desorption mechanism and provide useful information for a material design involving the adhesion target and the adhered substance under an external environment.

**Claims**

1. A measurement method for a change in a physical quantity of an adhered substance that changes due to external stimulation, comprising
   measuring a change in a physical quantity of an adhered substance on an adhesion target by causing a detection unit in which an adhesion target (a) and an adhered substance (b) on the adhesion target (a) are applied onto a sensor including a crystal resonator in an overlapping manner to resonate in a medium (d), and measuring an amount of change in a resonance frequency of the crystal resonator caused by external stimulation (c) to the detection unit.

2. The measurement method according to claim 1, wherein the external stimulation (c) is chemical injection or a temperature change.

3. The measurement method according to claim 1, wherein the change in the physical quantity is a change in an elastic modulus of the adhered substance.

4. The measurement method according to claim 1, wherein the change in the physical quantity is a change in an elastic modulus of a laminated part composed of the adhesion target and the adhered substance due to detachment of the adhered substance from the adhesion target.

5. The measurement method according to claim 1, wherein the change in the physical quantity is a change in a weight of the adhered substance.

6. The measurement method according to claim 1, wherein the medium (d) is a gas or a liquid.

7. The measurement method according to claim 1, wherein the a (adhesion target), the b (adhered substance), the c (external stimulation), and the d (medium) are a (bedrock), b (oil), c (administration of a chemical solution for recovery), and d (salt water).

8. The measurement method according to claim 1, wherein the a (adhesion target), the b (adhered substance), the c (external stimulation), and the d (medium) are a (substrate), b (contaminant), c (administration of a washing agent), and d (aqueous medium).

9. The measurement method according to claim 1, wherein the a (adhesion target), the b (adhered substance), the c (external stimulation), and the d (medium) are a (polymerizable monomers on a substrate), b (polymerizable monomers in the medium), c (administration of a catalyst into the medium), and d (solvent).

10. The change measurement method according to claim 1, wherein the a (adhesion target), the b (adhered substance), the c (external stimulation), and the d (medium) are a (coating film on a substrate), b (water), c (temperature change), and d (atmosphere adjustment gas).

11. The measurement method according to claim 1, wherein the a (adhesion target), the b (adhered substance), the c (external stimulation), and the d (medium) are a (coating film on a substrate), b (detection target gas), c (temperature change), and d (atmosphere adjustment gas).

12. The measurement method according to claim 1,

wherein the a (adhesion target) is a silicon dioxide-containing layer,
the b (adhered substance) is at least one oil selected from among a crude oil, a liquid hydrocarbon, and an edible oil,
the c (external stimulation) is administration of an aqueous chemical solution for recovery containing silica particles and a surfactant, and
the d (medium) is water or salt water, and
wherein the change in the physical quantity is a change in a weight of oil due to detachment from the silicon dioxide-containing layer.

13. The measurement method according to claim 1,

wherein the a (adhesion target) is a silicon dioxide-containing layer,
the b (adhered substance) is water in the silicon dioxide-containing layer,
the c (external stimulation) is a temperature change, and
the d (medium) is a humidity adjustment gas, and
wherein the change in the physical quantity is a change in a weight of water due to desorption from the silicon dioxide-containing layer.

14. The measurement method according to claim 1,

wherein the a (adhesion target) is a silicon dioxide-containing layer,
the b (adhered substance) is water in a humidity adjustment gas,
the c (external stimulation) is a temperature change,
the d (medium) is a humidity adjustment gas, and
the change in the physical quantity is a change in a weight of water due to adhesion to the silicon dioxide-containing layer.

15. The measurement method according to claim 2, wherein the chemical injection is performed by administering a solution containing a drug at 0.01 to 5 mL/min.

16. The measurement method according to claim 1, wherein the resonance frequency of the crystal resonator is in a range of 1 MHz to 100 MHz.

17. A device for measuring the change in the physical quantity according to any one of claims 1 to 16.

18. A silica-containing chemical solution for oil recovery which satisfies a relationship of $\Delta F_A/\Delta F_B$=0.8 to 400 and $\Delta D_A/\Delta D_B$=0.8 to 100 when a detection unit including a sensor in which a silicon dioxide-containing layer corresponding to bedrock is formed on a sensor part having a diameter of 15 mm in which a gold electrode is wired on a crystal resonator, and an oil layer corresponding to a petroleum layer is adhered onto the silicon dioxide-containing layer at 0.5 to 10 $\mu g/cm^2$ is brought into contact with a fluid A containing, as components, salt water containing salts including sodium chloride at a concentration of 0.1 to 30% by mass and a silica-containing chemical solution for oil recovery or a fluid B containing the salt water but not containing the silica-containing chemical solution for oil recovery at a fluid flow rate of 0.01 to 5 mL/min at 25°C and the sensor is resonated in a frequency range of 1 MHz to 100 MHz,

wherein a value of $\Delta F_A$ indicates a maximum value of a frequency change value $\Delta F$ indicating a change in a weight of the oil layer, which is detected by the sensor upon contact with the fluid A,
a value of $\Delta D_A$ indicates a local maximum value of an energy dissipation value $\Delta D$ indicating a change in an elastic modulus of the oil layer, which is detected by the sensor upon contact with the fluid A,
a value of $\Delta F_B$ indicates a maximum value of a frequency change value $\Delta F$ indicating a change in a weight of the oil layer, which is detected by the sensor upon contact with the fluid B, and
a value of $\Delta D_B$ indicates a local maximum value of an energy dissipation value $\Delta D$ indicating a change in an elastic modulus of the oil layer, which is detected by the sensor upon contact with the fluid B, and
wherein the silica-containing chemical solution for oil recovery contains 0.0001 to 50% by mass of a silica and 0.001 to 40% by mass of a surfactant with respect to a mass of the silica.

19. A silica-containing chemical solution for oil recovery which satisfies a relationship of $T_C > T_A$ when a detection unit including a sensor in which a silicon dioxide-containing layer corresponding to bedrock is formed on a sensor part having a diameter of 15 mm in which a gold electrode is wired on a crystal resonator, and an oil layer corresponding to a petroleum layer is adhered onto the silicon dioxide-containing layer at 0.5 to 10 $\mu$g/cm² is brought into contact with a fluid A containing, as components, salt water containing salts including sodium chloride at a concentration of 0.1 to 30% by mass and a silica-containing chemical solution for oil recovery or a fluid C containing the salt water and a silica-free chemical solution for oil recovery at a fluid flow rate of 0.01 to 5 mL/min at 25°C, and the sensor is resonated in a frequency range of 1 MHz to 100 MHz, wherein

a value of $T_A$ is a time from when a change in an energy dissipation value $\Delta D_A$ indicating a change in an elastic modulus of the oil layer starts until the energy dissipation value $\Delta D_A$ reaches a maximum, which is detected by the sensor upon contact with the fluid A, and
a value of Tc is a time from when a change in an energy dissipation value $\Delta Dc$ indicating a change in an elastic modulus of the oil layer (=$\Delta D_B$ value) starts until the energy dissipation value $\Delta Dc$ becomes a maximum, which is detected by the sensor upon contact with the fluid C.

FIG. 1

FIG. 2

FIG. 3

FIG. 4

# FIG. 5

# FIG. 6

# FIG. 7

# FIG. 8

## FIG. 9

## FIG. 10

# FIG. 11

# FIG. 12

## FIG. 13

## FIG. 14

FIG. 15

FIG. 16

## FIG. 17

## FIG. 18

# FIG. 19

# FIG. 20

# FIG. 21

# FIG. 22

## INTERNATIONAL SEARCH REPORT

| International application No. |
| --- |
| **PCT/JP2022/035992** |

| A. | CLASSIFICATION OF SUBJECT MATTER |
| --- | --- |

*G01N 5/02*(2006.01)i; *G01N 19/00*(2006.01)i; *G01N 19/04*(2006.01)i
FI:   G01N5/02 A; G01N19/00 B; G01N19/04 Z

According to International Patent Classification (IPC) or to both national classification and IPC

| B. | FIELDS SEARCHED |
| --- | --- |

Minimum documentation searched (classification system followed by classification symbols)

    G01N5/02; G01N19/00; G01N19/04

Documentation searched other than minimum documentation to the extent that such documents are included in the fields searched

    Published examined utility model applications of Japan 1922-1996
    Published unexamined utility model applications of Japan 1971-2022
    Registered utility model specifications of Japan 1996-2022
    Published registered utility model applications of Japan 1994-2022

Electronic data base consulted during the international search (name of data base and, where practicable, search terms used)

    JSTPlus/JMEDPlus/JST7580 (JDreamIII)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2012-137483 A (NIPPON DEMPA KOGYO CO LTD) 19 July 2012 (2012-07-19)<br>paragraphs [0048]-[0053], fig. 1-4, 11-12 | 1-6, 15-17 |
| X | JP 2002-333394 A (FUJITSU LTD) 22 November 2002 (2002-11-22)<br>paragraphs [0027], [0037], [0060]-[0068], fig. 3-4 | 1-2, 5-6, 16-17 |
| A | JP 2010-271285 A (SHIMIZU CONSTRUCTION CO LTD) 02 December 2010 (2010-12-02)<br>entire text, all drawings | 1-6, 15-17 |
| A | US 2021/0190727 A1 (HALLIBURTON ENERGY SERVICES, INC.) 24 June 2021<br>(2021-06-24)<br>entire text, all drawings | 1-6, 15-17 |
| A | WO 2019/239950 A1 (NATIONAL INSTITUTE FOR MATERIALS SCIENCE) 19<br>December 2019 (2019-12-19)<br>entire text, all drawings | 1-5, 15-17 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 December 2022** | **20 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/035992** |

**C. DOCUMENTS CONSIDERED TO BE RELEVANT**

| Category* | Citation of document, with indication, where appropriate, of the relevant passages | Relevant to claim No. |
| --- | --- | --- |
| A | 吉原 佐知雄, 鉛フリーはんだの耐マイグレーション性評価, エレクトロニクス実装学会誌, 2001, vol. 4, no. 4, pp. 267-271<br>entire text, all drawings, (YOSHIHARA, Sachio. Newly Developed Anti-Ionic Migration Tests for Lead-Free Solders. Journal of The Japan Institute of Electronics Packaging.) | 1-6, 15-17 |

Form PCT/ISA/210 (second sheet) (January 2015)

**INTERNATIONAL SEARCH REPORT**

| International application No. |
| --- |
| **PCT/JP2022/035992** |

**Box No. III        Observations where unity of invention is lacking (Continuation of item 3 of first sheet)**

This International Searching Authority found multiple inventions in this international application, as follows:

Document 1: JP 2012-137483 A (NIPPON DEMPA KOGYO CO., LTD.) 19 July 2012 (2012-07-19) paragraphs [0048]-[0053], fig. 1-4, 11-12 (Family: none)

The claims are classified into the following 11 inventions.

● (Invention 1)
Since document 1 (see, in particular, paragraphs [0048]-[0053] and fig. 1-4, 11, and 12) discloses an invention pertaining to: a "method for measuring cell adhesion varied by Adriamycin, wherein a sensor unit 2 (corresponding to the "detection part") in which an adsorption layer 46 (corresponding to the "substance to be adhered") and HeLa cells (corresponding to the "adhering substances") provided thereon are stacked on and cover a crystal sensor 7 (corresponding to the "crystal oscillator") is resonated in a culture medium (corresponding to the "medium"/"liquid") supplied at a supply rate of 50 μL/min, the change in resonance frequency caused by switching the supplied aqueous solution to Adriamycin (corresponding to the "external stimulation"/"chemical administration") is measured, and through the measurement, the situation (corresponding to the "physical quantity of the adhering substances") in which the HeLa cells proliferate on the adsorption layer 46 or die and detach from the adsorption layer 46 is acquired in real time; and a device", claims 1-2, 15, and 17 lack novelty in light of document 1 and thus do not have a special technical feature.
Accordingly, the inventions in claims 1-2 and 15, for which the presence or absence of a special technical feature was previously determined, and claim 17 referring to any of claims 1-2 and 15 are subjects of the search.
Moreover, the inventions in claims 3-6 and 16, and claim 17 referring to any of claims 3-6 and 16 are inventions for which it would be more efficient to examine together with the inventions, which are the subjects of the search, and are added to the subject of the search.
Therefore, the inventions in claims 1-6 and 15-16, and claim 17 referring to any of claims 1-6 and 15-16 are classified as invention 1.
(Invention 1) Claims 1-6 and 15-16, and claim 17 referring to any of claims 1-6 and 15-16

● (Invention 2)-(Invention 9)
A common technical feature shared by claims 1-2 and 15 and claim 17 referring to any of claims 1-2 and 15, and claims 7-14 does not make a contribution over the prior art in light of the disclosure of document 1 and thus cannot be said to be a special technical feature. Moreover, claims 7-14 are not substantially identical to or similarly closely related to any of the claims classified as invention 1, and thus cannot be classified as invention 1.
In addition, as a result of examining the inventions that are the subjects of the examination, the inventions in claims 7-14 are not inventions that can substantially be examined without additional prior art search and judgment, and there is no reason to think that it would be more efficient to examine the inventions in claims 7-14 together with said inventions.
Therefore, claims 7-14, and claim 17 referring to any of claims 7-14 are classified as follows.
(Invention 2) Claim 7, and claim 17 referring to claim 7
(Invention 3) Claim 8, and claim 17 referring to claim 8
(Invention 4) Claim 9, and claim 17 referring to claim 9
(Invention 5) Claim 10, and claim 17 referring to claim 10
(Invention 6) Claim 11, and claim 17 referring to claim 11
(Invention 7) Claim 12, and claim 17 referring to claim 12
(Invention 8) Claim 13, and claim 17 referring to claim 13
(Invention 9) Claim 14, and claim 17 referring to claim 14

● (Invention 10) and (Invention 11)
Claims 18-19 are not inventions in the same category that includes all invention-specifying matters of claim 1. Moreover, as a result of examining the inventions that are the subjects of the examination, the inventions in claims 18-19 are not inventions that can substantially be examined without additional prior art search and judgment, and there is no reason to think that it would be more efficient to examine the inventions in claims 18-19 together with said inventions. Furthermore, claims 18-19 are each intended to specify a silica-containing petroleum recovery chemical liquid by using different parameters.
Therefore, claims 18-19 are classified as follows.
(Invention 10) Claim 18
(Invention 11) Claim 19

Form PCT/ISA/210 (continuation of first sheet) (January 2015)

## INTERNATIONAL SEARCH REPORT

| International application No. |
|---|
| **PCT/JP2022/035992** |

**Box No. III     Observations where unity of invention is lacking (Continuation of item 3 of first sheet)**

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-6 and 15-16, and claim 17 referring to any of claims 1-6 and 15-16**

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

<div align="center">

**INTERNATIONAL SEARCH REPORT**
**Information on patent family members**

</div>

International application No.

**PCT/JP2022/035992**

| Patent document cited in search report | | | Publication date (day/month/year) | Patent family member(s) | | | Publication date (day/month/year) |
|---|---|---|---|---|---|---|---|
| JP | 2012-137483 | A | 19 July 2012 | (Family: none) | | | |
| JP | 2002-333394 | A | 22 November 2002 | (Family: none) | | | |
| JP | 2010-271285 | A | 02 December 2010 | (Family: none) | | | |
| US | 2021/0190727 | A1 | 24 June 2021 | WO | 2021/126283 | A1 | |
| WO | 2019/239950 | A1 | 19 December 2019 | US | 2021/0190655 | A1 | |
| | | | | entire text, all drawings | | | |
| | | | | EP | 3805730 | A1 | |
| | | | | CN | 112262307 | A | |

Form PCT/ISA/210 (patent family annex) (January 2015)

**EP 4 411 340 A1**

**REFERENCES CITED IN THE DESCRIPTION**

**Patent documents cited in the description**

- JP H618394 A
- JP 2004177258 A

- WO 2007111147 A

**Non-patent literature cited in the description**

- *SPIE,* 2005, vol. 5753, 655-662